# EUROPEAN PATENT SPECIFICATION

(11) **EP 3 254 792 B1**
(45) Date of publication and mention of the grant of the patent: **27.03.2019**
(21) Application number: 16397520.4
(22) Date of filing: 10.06.2016
(51) Int. Cl.: B23D 59/00, B27B 5/04

(54) **A METHOD FOR SAWING EDGES OF A WOOD LAMINATE PANEL AND AN ARRANGEMENT FOR THE SAME**
VERFAHREN ZUM SÄGEN DER KANTEN EINER HOLZLAMINATPLATTE UND ANORDNUNG DAFÜR
PROCÉDÉ DE SCIAGE DE BORDS D'UN PANNEAU STRATIFIÉ EN BOIS ET AGENCEMENT POUR CELUI-CI

(43) Date of publication of application: 13.12.2017
(73) Proprietor: UPM Plywood Oy, 15140 Lahti (FI)
(72) Inventor: MARTTILA, Heikki, 00610 HELSINKI (FI); NYKÄNEN, Pekka, 52300 RISTIINA (FI); SIHVONEN, Petri, 50970 MIKKELI (FI); KATTILAKOSKI, Jani, 50160 MIKKELI (FI)
(74) Representative: Berggren Oy, Tampere

(56) References cited:
- WO-A1-2015/135686
- WO-A2-2007/149131
- CN-B- 103 538 113
- US-A- 3 922 940

## Description

### Technical field

The invention relates to arrangements and methods for automatically sawing edges of a wood laminate panel, as per the preamble of claims 11 and 1 respectively. An example of such an arrangement and method is disclosed by US 3 922 940 A.

### Background

Wood laminate panels, such as plywood panels, are generally manufactured by laying subsequent layers of the panel on top of each other, arranging some adhesive in between the layers, and hot-pressing the stack of layers to form a wood laminate panel.

Because of manufacturing tolerances, the side surfaces of such a panel are unfinished. In order to make a wood laminate panel with finished side surfaces, edges of the wood laminate panel are sawn off the panel to form finished side surfaces.

When manufacturing multiple panels, it is known to saw a predetermined amount off from each edge of each unfinished panel to form finished panels. The predetermined amount remains the same from a panel to another panel.

Because of process variations, the width of the defected areas near the unfinished surfaces is not necessary the same from a panel to another panel. Therefore, the predetermined amount may not be sufficient for every panel. When the width is not sufficient, the quality of the finished panel is not sufficient, and the panel becomes wasted. Thus, the aforementioned method for finishing the panels may result in a producing some waste.

### Summary

An object of the present invention is to present a method and an arrangement, by which the amount of waste can be reduced. It has been found that by imaging optically a finished side surface, a width of a defected area can be determined for each panel by using such images. Correspondingly, the panel can be moved relative to a saw by such an amount that the defected area, and essentially only the defected area, can be sawn off the panel to finish the panel. In this way, by sawing a panel specific amount off from at least an edge of the panel, the finished panel will more likely full fill the quality requirements, which reduces the amount of waste. The invention is disclosed in more specific terms in the independent claim 1. A corresponding arrangement for finishing the panel is disclosed in the independent claim 11.

In a preferred embodiment, two opposite finished side surfaces are optically imaged and the information is used to determine a width of a defected area of the panel. This information is used to saw a panel-specific amount of defected edge off from the panel.

In an embodiment, a main surface, such as a top surface, of the panel is optically imaged to obtain information indicative of the shape of the panel; and the information indicative of the shape of the panel is also used to determine the width of the defected area of the panel.

In a preferred embodiment, a side stopper is moved relative to a saw, by using the width of the defected area. Moreover, the wood laminate panel can be aligned with the saw by moving the panel towards the side stopper until the panel makes a contact with the side stopper.

In a preferred embodiment, the method is applied to finish (i.e. saw the edges off from) a plywood panel.

These and other preferable embodiments are disclosed in more detail in the dependent claims 2 to 10 and 12 to 16.

### Brief description of the drawings

- Figs. 1a1 to 1a3: show a way of stacking of layers of a wood laminate panel to form a wood laminate panel,
- Figs. 1b1 to 1b3: show another way of stacking of layers of a wood laminate panel to form a wood laminate panel,
- Fig. 2: shows, in a top view, a wood laminate panel with unfinished surfaces,
- Fig. 3: shows, in a top view, a wood laminate panel with unfinished surfaces,
- Fig. 4: shows, in a top view, a process for finishing a wood laminate panel and a finished wood laminate panel,
- Fig. 5: shows, in a top view, an arrangement for finishing a wood laminate panel,
- Fig. 6a: shows an image of a first finished end surface of a wood laminate panel, the image corresponding to the part having a defected area,
- Fig. 6b: shows an image of a second finished end surface of a wood laminate panel, the image corresponding to the part having a defected area,
- Fig. 7: shows, in a top view, a wood laminate panel and a grain orientation of a topmost layer,
- Fig. 8: shows, in a side view, structure a wood laminate panel and a grain orientation within the layers,
- Fig. 9: shows, in a perspective view, a part of an arrangement for finishing a wood laminate panel,
- Fig. 10: shows an image of a first finished end surface of a wood laminate panel,
- Figs. 11a to 11d: show different types of defects some of which are detected in an embodiment of the method, and
- Figs. 12a and 12b: show two panels each having a defected area, the widths of the defected areas being different.

### Detailed description

The invention relates to a method for finishing a wood laminate panel 300. Finishing in this context means sawing four boundaries of a wood laminate panel. The wood laminate panel 300 has the shape of a substantially rectangular panel, and all the four side surfaces of the panel are finished by sawing to obtain a rectangular finished panel.

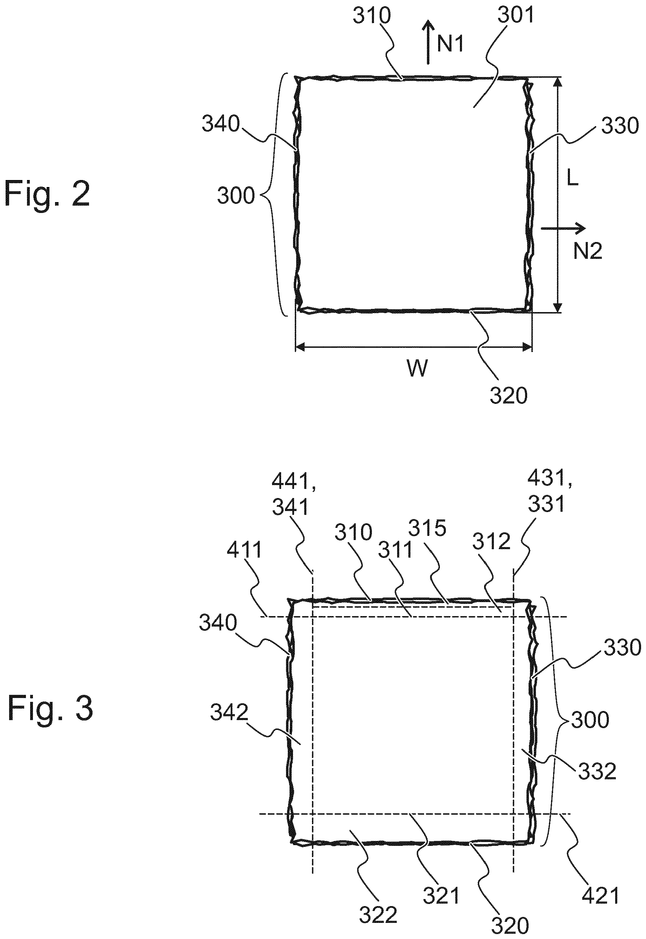

Referring to Figs. 2, 7, and 8, the term wood laminate panel 300 refers to an object having a length L, a width W, and a thickness T, wherein the thickness T is smaller than the smaller of the length L and the width W. The length L is perpendicular to the width W. The thickness T is perpendicular to the length L and the width W. In the figures, the direction Sx is parallel to length or width, the direction Sz is parallel to thickness, and the direction Sy is perpendicular to both Sx and Sz.

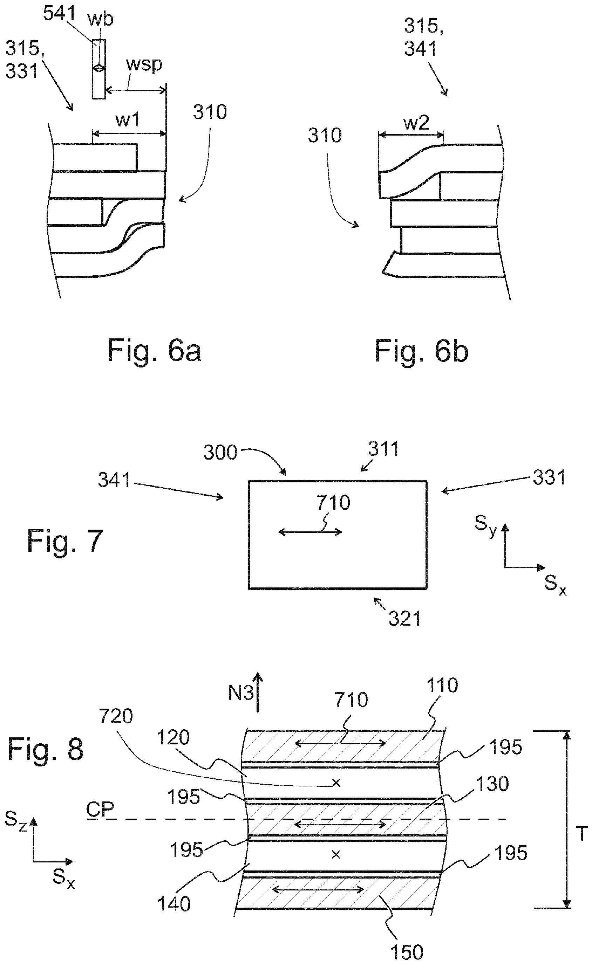

The wood laminate panel 300 comprises a first layer 110 comprising wood and a second layer 120 comprising wood. The first and the second layers 110, 120 are arranged relative to each other in the direction Sz of the thickness T of the wood laminate panel 300. The centres of these layers are arranged a distance apart from each other in the direction of the thickness T. The layers may be arranged next to each other in the direction of thickness of the wood laminate panel. Moreover, the wood laminate panel 300 comprises adhesive 195 in between each two neighbouring layers (110, 120, 130 ,140, 150) comprising wood, and thus also in between the first layer 110 and the second layer 120. As indicated in Fig. 8, the panel 300 may comprise further layers 130, 140, 150 comprising wood. The other layers (130, 140, 150) comprising wood may be arranged in between the first 110 and the second layer 120. In general, none, only one, or both of the first 110 and the second 120 layers may be a surface layer of the wood laminate panel.

Examples of a wood laminate panel 300 include plywood, laminated timber, cross laminated timber, and oriented standard board. In the following, the invention is explained using plywood as an example. Even if the method can be applied also to the other types of laminated wood panels, application of the method to plywood has certain technical advantages, as will be detailed below.

To define terms and orientations used in this application, Figs. 2 and 3 show, in a top view, a plywood panel 300 before the sides have been finished. The panel has four sides. Two opposite of the sides are hereinafter referred to as the side surfaces 310, 320 and the other two opposite of the sides are hereinafter referred to the end surfaces 330, 340. Correspondingly, the plywood panel has a first unfinished side surface 310 having a first surface normal N1 substantially parallel to the length L or the width W. The term substantially parallel means that the first surface normal is parallel or forms an angle of at most 15 degrees with the length or the width. At least before finishing, the plywood panel is not necessarily rectangular, even if it typically comprises only four sides. The plywood panel 300 has also a second unfinished side surface 320 opposite to the first unfinished side surface 310, whereby the second unfinished side surface has a surface normal reverse or substantially reverse to the first surface normal N1. The term substantially reverse may refer e.g. to an angle of from 150 to 210 degrees to the first surface normal N1.

The plywood panel 300 has also a first unfinished end surface 330 having a second surface normal N2 substantially parallel to the width W or the length L, respectively. Substantially parallel means an angle of at most 15 degrees or no angle. Thus, first unfinished end surface 330 has a second surface normal N2, which is substantially perpendicular to the thickness T of the panel and the first surface normal N1. Substantially perpendicular here in the meaning that the second surface normal is perpendicular or forms an angle of from 75 to 105 degrees with the first surface normal N1. The plywood panel has also a second unfinished end surface 340 opposite to the first end surface 330, whereby the second unfinished end surface 340 has a surface normal reverse to the second surface normal N2. For definition of substantially reverse, see above. The plywood panel 300 also has two main surfaces 301, i.e. a top surface and a bottom surface, wherein the surface normals of the main surfaces 301 are parallel to the thickness T of the panel 300.

Because of a common manufacturing method, the side (310, 320) and end (330, 340) surfaces are, at a point of time, unfinished. Moreover, because of the common manufacturing method, the layers 110, 120 of the plywood panel 300 are better aligned near the first unfinished side surface 310 than near either of the second surfaces (320, 340): the second unfinished side surface 320, or the second 340 unfinished end surface. Moreover, because of the common manufacturing method, the layers 110, 120 of the plywood panel 300 are better aligned also near the first unfinished end surface 330 than near either of the second surfaces (320, 340).

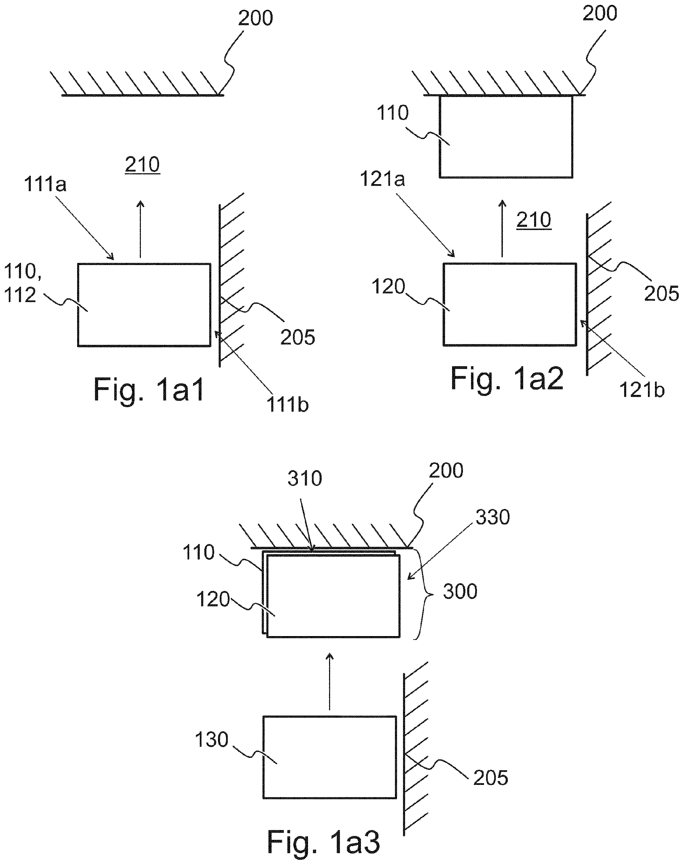

Referring to Figs. 1a1 - 1a3, in a common manufacturing method for a plywood panel 300, a plywood panel 300 is manufactured by manufacturing the first 110 and second 120 layers of the wood laminated panel, aligning (i.e. positioning) an edge 111a of the first layer 110 such that the edge 111a of the first layer 110 makes a contact with a first side aligner 200 and aligning (i.e. positioning) an edge 121a of the second layer 120 such that the edge 121a of the second layer 120 makes a contact with the first side aligner 200. A corresponding arrangement may comprise a conveyor 210 configured to move the layers 110, 120 towards the first side aligner 200. Therefore, these edges 111a, 121a become reasonably well aligned relative to each other. As indicated in the figures 1a1 to 1a3, the layers may have been aligned, from another edge (111b, 121b), to a second side aligner 205. Using the vocabulary given above, the first unfinished side surface 310 of the wood laminate panel comprises [a] the edge 111a of the first layer that has been aligned with the first side aligner 200 and [b] the edge 121a of the second layer that has been aligned with the first side aligner 200. In this way, the layers of the plywood panel are reasonable well aligned at the first unfinished side surface 310 of the plywood panel 300. Correspondingly, the first unfinished end surface 330 of the wood laminate panel comprises [a] the other edge 111b of the first layer 110 that has been aligned with the second side aligner 205 and [b] the other edge 121b of the second layer 120 that has been aligned with the second side aligner 205. In this way, the layers of the plywood panel are reasonable well aligned at the first unfinished end surface 330 of the plywood panel 300.

As an alternative to a mechanical side aligner, the edge 111a of the first layer 110 can be aligned to a side alignment position 200 e.g. by using a conveyor and a photodetector such that the first layer 110 is moved only until the photodetector detects the edge 111a of the first layer 110 at the side alignment position. Correspondingly, the edge 121a of the second layer 120 can be aligned to the side alignment position 200 e.g. by using a conveyor and the photodetector or another photodetector such that the second layer is moved only until the photodetector detects the edge 121a of the second layer at the side alignment position 200. In this way, the first unfinished side surface 310 of the wood laminate panel comprises the edge 111a of the first layer and the edge 121a of the second layer. This applies also to the other edges 111b and 121b and the first end surface 330, whereby the other edges 111b, 121b can be aligned to an end alignment position 205.

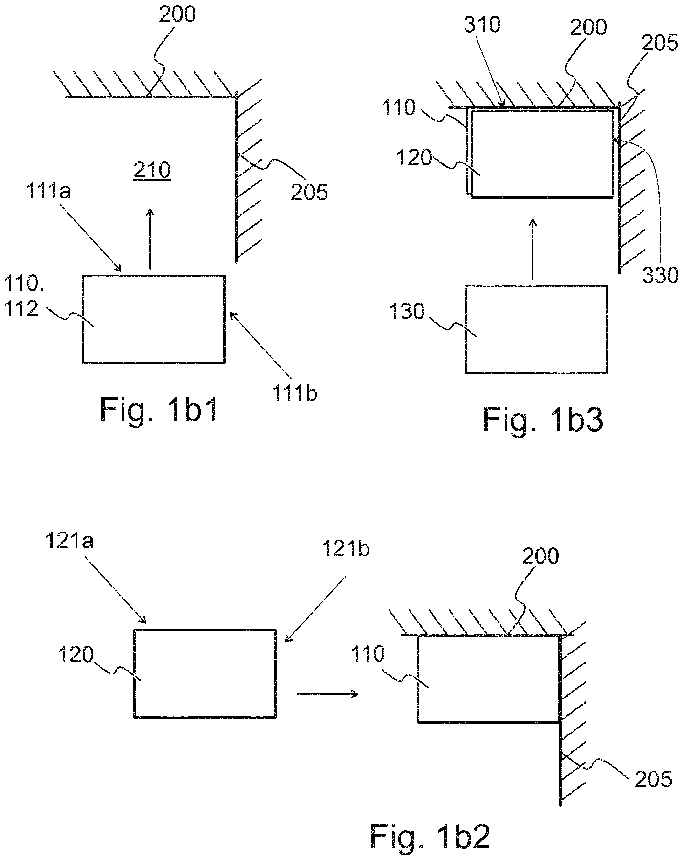

In another manufacturing method, as depicted in Figs. 1b1 to 1b3, the layers 110, 120, 130 may be stacked in such a way that some of the layers are moved onto the stack from one direction, and some of the layers are moved onto the stack from another, perpendicular, direction. Also in this way, the first side surface 310 and the first end surface 330 of the plywood panel become reasonably well aligned. Typically in the field, the first surfaces are called "hard", because the reasonably well alignment makes the surfaces hard.

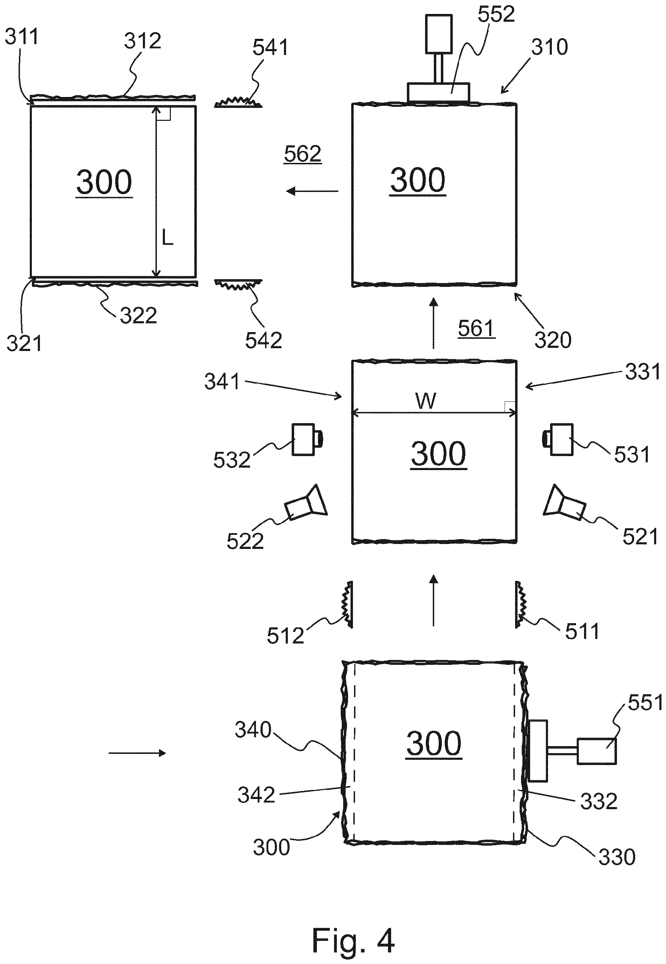

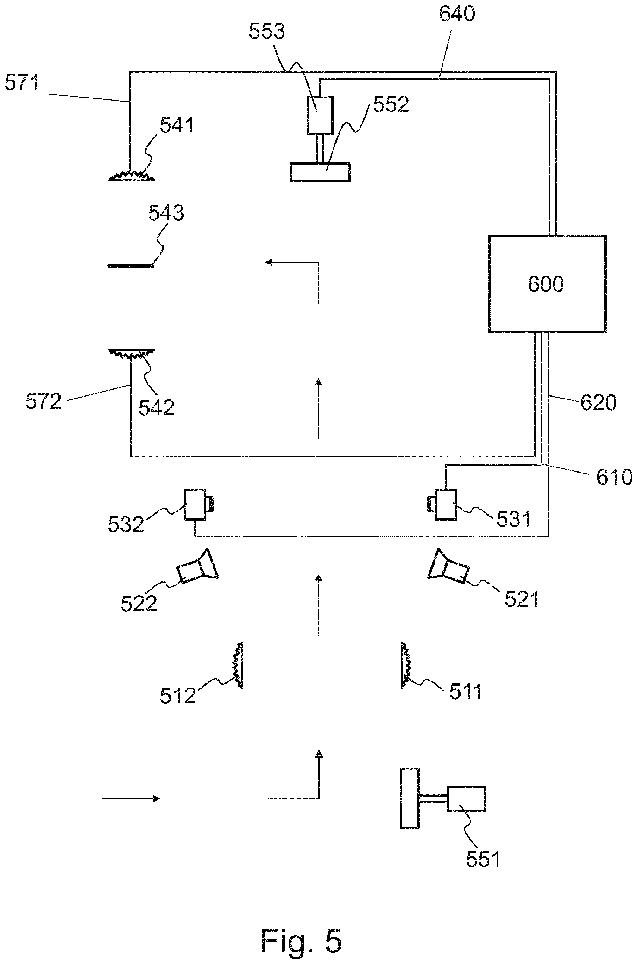

In this way, a wood laminate panel with unfinished surface 310, 320, 330, 340 is produced. To finish the edges they are sawn using a method for sawing edges of a wood laminate panel. Figures 4 and 5 show a preferable arrangement for sawing edges of a wood laminate panel 300.

Referring to Figs. 3 and 4, in an embodiment of the method, a first end piece 332 comprising the first unfinished end surface 330 is sawn from the wood laminate panel 300. The first end piece 332 may be sawn along the sawing line 431. Thereby a first finished end surface 331 is formed to the wood laminate panel 300. A corresponding arrangement comprises a first primary saw 511 configured to saw from a wood laminate panel 300 a first end piece 332 comprising a first unfinished end surface 330 of the wood laminate panel 300, to form a first finished end surface 331 to the wood laminate panel 300.

The first end piece 332 is sawn in such a way that the surface normal of the first finished end surface 331 defines the direction of the length L or the width W of the wood laminate panel 300. More precisely, provided that the first unfinished end surface 330 has a second surface normal N2 substantially parallel to the length L of the wood laminate panel 300, the surface normal of the first finished end surface 331 is parallel to the length L of the wood laminate panel 300 (not shown). Correspondingly, provided that the first unfinished end surface 330 has a second surface normal N2 substantially parallel to the width W of the wood laminate panel (as in Fig. 2), the surface normal of the first finished end surface 331 is parallel to the width W of the wood laminate panel 300 (see Fig. 4). In both cases, the surface normal of the first finished end surface 331 is substantially parallel to the second surface normal N2 of the first unfinished end surface 330. The term substantially parallel means no angle or an angle of at most 15 degrees. Referring to Figs. 3 and 4, in an embodiment, also a second end piece 342 comprising the second unfinished end surface 340 is sawn from the wood laminate panel 300, thereby forming a second finished end surface 341 to the wood laminate panel 300. The second end piece 342 may be sawn in such a way that the second finished end surface 341 is opposite to the first finished end surface 331. An arrangement may comprise a second primary saw 512 for the purpose.

Referring to Fig. 4, thereafter, at least part of the first finished end surface 331 is imaged. In particular, at least such a part of the first finished end surface 331, that is close to (i.e. near) the first unfinished side surface 310, is imaged. The term "close" herein refers to such a part of the surface, of which distance from the unfinished side surface 310 is at most 200 mm, at most 100 mm, or at most 50 mm. In an embodiment, at least such a part of the first finished end surface 331, that intersects with the first unfinished side surface 310, is imaged. An example of such an image is shown in Fig. 6a. In an embodiment, the whole first finished end surface 331 is imaged. Imaging may be made with an optical detector 531. Preferably, the optical detector 531 is an optoelectronic detector 531, such as a digital camera 531, such as a line camera 531. By said imaging, first information 610 (Fig. 5) indicative of the structure of the wood laminate panel 300 is received. A corresponding arrangement comprises a first optical detector 531 configured to image at least the part of the first finished end surface 331 of the wood laminate panel 300 as discussed in context with the method. Moreover, the first optical detector 531 is arranged to give first information 610 indicative of the structure of the wood laminate panel 300. A corresponding arrangement may comprise a light source 521 configured to lighten the first finished end surface 331 of the wood laminate panel 300. The light source 521 may be needed in on-line measurements, wherein the imaging must be done relatively rapidly.

In addition, the method comprises imaging at least part of the second finished end surface 341. In particular, at least such a part of the second finished end surface 341, that is close to the first unfinished side surface 310, is imaged. In an embodiment, at least such a part of the second finished end surface 341, that intersects with the first unfinished side surface 310, is imaged. In an embodiment, the whole second finished end surface is imaged 341. Imaging may be done as discussed in connection with imaging the first finished end surface 331. An example of such an image is shown in Fig. 6b. By imaging the second finished end surface 341, second information 620 (Fig. 5) indicative of the structure of the wood laminate panel 300 is received. A corresponding arrangement comprises a second optical detector 532 configured to image at least the part of the second finished end surface 341 of the wood laminate panel 300 as discussed in context with the method. Moreover, the second optical detector 532 is arranged to give second information 620 indicative of the structure of the wood laminate panel 300. A corresponding arrangement may comprise a light source 522 configured to lighten the second finished end surface 341 of the wood laminate panel 300. The light source 522 may be needed in on-line measurements, wherein the imaging must be done relatively rapidly.

By using the first information 610 indicative of the structure of the wood laminate panel 300 and the second information 620 indicative of the structure of the wood laminate panel 300, information indicative of a width w1, w2 of a defected area 315 near the first unfinished side surface 310 of the wood laminate panel 300 is determined. Preferably, the width w1, w2 of the defected area 315 is determined automatically. Preferably, the width w1, w2 of the defected area 315 is determined in a control unit 600. A corresponding arrangement comprises a control unit 600 that is configured to determine information indicative of a width w1, w2 of the defected area 315 near the first unfinished side surface 310 of the wood laminate panel 300 by using the first information 610 indicative of the structure of the wood laminate panel 300 and the second information 620 indicative of the structure of the wood laminate panel 300. As will be detailed below, the defected area 315 does not necessarily comprise all the defects. The width w1, w2 of the defected area 315 may be defined so that the resulting finished side surface 311 will have a sufficiently high quality.

Referring to Figs. 3 and 6a, the wood laminate panel comprises a defected area 315 near the first unfinished side surface 310. The aim of finishing the first side surface 310 of the panel 300 is, in particular, to saw away from the panel such defects at this (and other) edges, that a finished panel with reasonably high quality edges is obtained. As indicated in Figs. 4, 6a, and 6b, by imaging the finished end surfaces 331 and 341, the structure of the panel 300 near the first unfinished side surface 310 can be observed. From the image, such as the image of Fig. 6a, the width w1 of the defected area 315 can be determined. In contrast, before finishing the first unfinished end surface 330, defects near and on the first unfinished end surface 330 prevent the visual observation good area of the panel and within the panel, in a direction parallel to a direction of the first unfinished end surface 330. Therefore, the first 330 and second 340 end surfaces are first finished, and only thereafter, the first 331 and second 341 finished end surfaces are imaged to obtain the first 610 and second 620 information.

As for the width w1, w2 of the defected area, it is possible to optimize the quality of the first finished side surface 311 by selecting the width of the a first side piece 312 to be sawn, as discussed in more detail below. The widths of the first side pieces 312 sawn off from panels 300 correlate positively with the widths w1, w2 of the defected areas 315 of those panels 300.

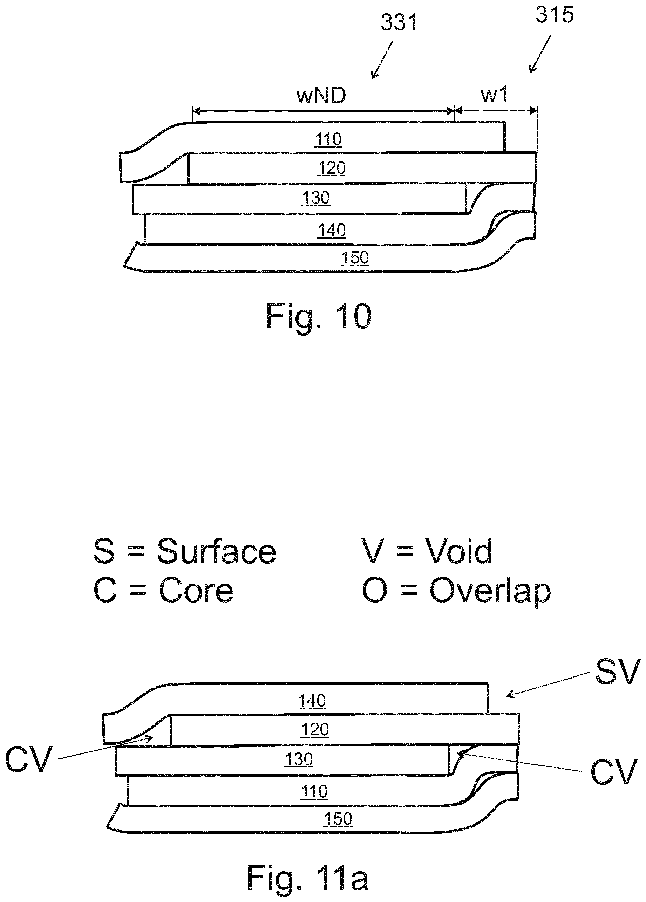

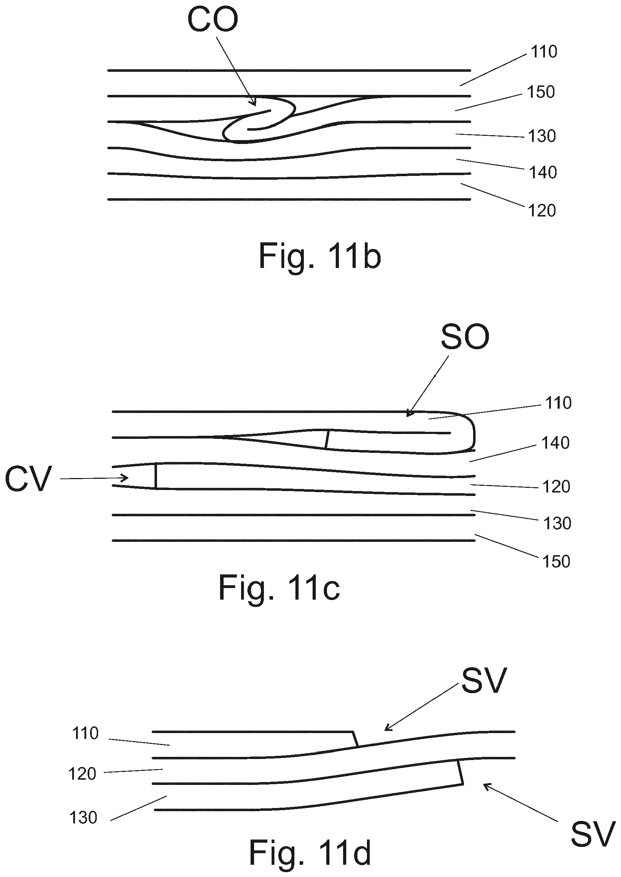

Figures 11a to 11d show examples of defects of a wood laminate panel. In principle, the defect can be located on the surface (denoted by S in the figures 11a-11d) or in the core (denoted by C in the figures 11a-11d). Moreover, the type of defect may be e.g. a void (denoted by V in the figures 11a-11d) or an overlap (denoted by O in the figures 11a-11d). These classifications result in four different types of defects: surface void (SV), surface overlap (SO), core void (CV) or core overlap (CO). A void is a result of a too narrow layer, whereby a layer is missing at a point of the plywood panel. Voids are shown in Figs. 11a, 11c, and 11d. An overlap is a result of a layer turning onto itself during the manufacturing process, whereby extra layers are present at that point. An overlap is shown in Figs. 11b and 11c. In the method, preferably a void of at least one of the aforementioned types is detected. More precisely, an embodiment comprises imaging at least such a part of the first finished end surface 331 and the second finished end surface 341 that are near the first unfinished side surface 310, thereby receiving first information 610 and second information 620 indicative of the structure of the wood laminate panel 300; and determining, using the first 610 and second 620 information indicative of the structure of the wood laminate panel 300, information indicative of a width (w1, w2) of a defected area 315 near the first unfinished side surface 310 of the wood laminate panel 300. Moreover, determining the information indicative of a width (w1, w2) of a defected area 315 near the first unfinished side surface 310 of the wood laminate panel 300 comprises determining, by using the first 610 and second 620 information indicative of the structure of the wood laminate panel 300, that the defected area comprises a defect that belongs to the group of a surface void, a surface overlap, a core void, and a core overlap. In particular the voids are most clearly visible in the images. Thus, an embodiment comprises determining, by using the first 610 and second 620 information indicative of the structure of the wood laminate panel 300, that the defected area comprises a void. An embodiment comprises determining, by using the first 610 and second 620 information indicative of the structure of the wood laminate panel 300, that the defected area comprises a surface void or a core void.

An embodiment, when applied in sequence to multiple panels, comprises determining, by using the information indicative of the structures of the wood laminate panels, that defected areas of the panels, in combination, comprise a surface void, a surface overlap, a core void, and a core overlap.

In an embodiment, the control unit 600 of the arrangement is configured to determine information indicative of a width (w1, w2) of the defected area 315 near the first unfinished side surface 310 of the wood laminate panel 300 using the first 610 and second 620 information indicative of the structure of the wood laminate panel 300. In an embodiment, the control unit 600 is configured to determine that the defected area comprises a defect that belongs to the group of a surface void, a surface overlap, a core void, and a core overlap. In an embodiment, the control unit 600 is configured to receive information indicative of the structures of the wood laminate panels, and the control unit is configured to determine that a defect is a surface void, another a defect is a surface overlap, another a defect is a core void, and another a defect is a core overlap.

In addition, other types of defects are known to occur, these including fallen off knot, hole, open split, chip, open seam, cross split, linear wormhole, missing patch, and missing veneer. In an embodiment, also a defect of any of these types may be detected from the images.

Referring to Figs. 3 to 5, after having determined the width w1, w2 of the defected area 315, the wood laminate panel 300 is transferred relative to a saw 541, such as a first secondary saw 541, by using the width w1, w2 of the defected area 315 near the first unfinished side surface 310 of the wood laminate panel 300, in such a way that the defected area 315 can be sawn by the saw 541. Preferably, the panel 300 is moved in that way automatically. Preferably, the panel is moved in such a way that the control unit 600 is configured control the movement so that the defected area 315 can be sawn by the saw 541. Preferably, the panel 300 is moved in such a way that by sawing the defected area 315, a first side piece 312 comprising the defected area 315 is sawn. Moreover, preferably, the first side piece 312 is essentially as large as the defected area 315. A corresponding arrangement comprises a first secondary saw 541 configured to saw from the wood laminate panel 300 a first side piece 312 comprising a first unfinished side surface 310 of the wood laminate panel and a defected area 315. The arrangement further comprises means for moving the panel 300 relative to the first secondary saw 541.

It is to be noted, that the aforementioned "defected area" does not necessarily comprise all the defects. As will be detailed below, the defected area comprises such defects that the quality of the finished first side surface 311 will be at an acceptable level.

As an example, the arrangement may comprise a conveyor for moving the wood laminate panel 300 relative to the first secondary saw 541. The conveyor may be e.g. a roll conveyor or a belt conveyor. As another example, the arrangement may comprise means 571 for moving the saw 541 relative to the panel 300. In a preferable embodiment, the panel 300 is moved with a conveyor 561 towards a side stopper 552, until the panel makes a contact with the side stopper 552. The position of the side stopper 552 may be adjusted with means 553 for moving the side stopper 552. Moreover, the control unit 600 is configured to control means (561, 553, 571) for moving the wood laminate panel 300 and/or the first secondary saw 541 relative to each other, by using the width w1, w2 of the defected area 315 near the first unfinished side surface 310 of the wood laminate panel 300.

Referring to Fig. 4, after said transferring the panel 300 relative to the saw 541, a first side piece 312 comprising the defected area 315 and the first unfinished side surface 310 is sawn from the wood laminate panel 300. In this way, a first finished side surface 311 is formed to the wood laminate panel 300. The first side piece 312 is sawn in such a way that the surface normal of the first finished side surface 311 defines the width W or the length L of the wood laminate panel 300. More precisely, provided that the first unfinished side surface 310 has a first surface normal substantially parallel to the length L of the wood laminate panel, the surface normal of the first finished side surface 311 is parallel to the length L of the wood laminate panel (see Figs. 2 and 4). Correspondingly, provided that the first unfinished side surface 310 has a first surface normal N1 substantially parallel to the width W of the wood laminate panel, the surface normal of the first finished side surface 311 is parallel to the width W of the wood laminate panel. In both cases, the surface normal of the first finished side surface 311 is substantially parallel to the first surface normal N1 of the first unfinished side surface 310. The term substantially parallel means no angle or an angle of at most 15 degrees.

As is evident, the length of the unfinished panel 300 is somewhat larger than the length of the finished panel 300. However, the direction of length is, in this description, defined as being parallel to a surface normal of a finished surface (i.e. a surface of the finished panel). This applies also to the width of the panel *mutatis mutandis.*

The width w1, w2 of the defected area 315, as discussed above, extends in the direction of the first surface normal N1 (see Figs. 2 and 3). As indicated above, the imaging, however, is done from the first 331 and second 341 finished end surfaces both having a surface normal substantially perpendicular to the thickness T of the wood laminate panel 300 and substantially perpendicular to the first surface normal N1. Preferably, the first side piece 312 is sawn in such a way that the combined width of the width wsp of the first side piece and the width wb of the blade of the first secondary saw 541 is substantially equal to the width w1 of the defected area 315; as indicated in Fig. 6a: wsp+wb=w1. However, some tolerance may be added to the width wsp of the first side piece 312. For example, the combined width of the width wsp of the first side piece 312 and the width wb of the blade of the first secondary 541 saw may be 0.5 mm, 1 mm, 2 mm, 3 mm, 4 mm, 5 mm, or 10 mm (i.e. a tolerance value) greater than the width of the defected area. That is wsp+wb=w1+Δw, wherein Δw has any one of the aforementioned tolerance values. In this way, as little as needed can be sawn off from the side that is known to be reasonably well aligned already at the manufacturing step. That side is referred to as the first unfinished side surface 310, as indicated in Figs. 1a to 1c.

As for the applicable width of the defected area, by using the first information 610 indicative of the structure (i.e. information obtained by imaging the first finished end surface 331), a first width w1 of the defected area 315 can be determined. Moreover, by using the second information 620 indicative of the structure (i.e. information obtained by imaging the second finished end surface 341), a second width w2 of the defected area 315 can be determined. The information indicative of the width of the defected area may correspond e.g. to the maximum of the first width w1 and the second width w2. A corresponding first side piece 312 can be sawn from the panel 300 to finish the first side surface 310.

Moreover, the width w1 or w2 itself may be determined such that the quality of the first finished side surface 311 will meet a predetermined limit, at least near the first finished end surface 331 or the second finished end surface 341, respectively.

For example, it may suffice that the first finished side surface 311 may comprise core voids (CV, Fig. 11c) wherein the depth of the core voids on the first finished side surface 311 is at most 5 mm. For example, it may be required, that at most three core layers of the first finished side surface 311 comprise core voids.

In addition, the aforementioned method may be used to finish a panel that will be later coated. Then, after the coating, the panel may be re-finished, i.e. the edges may be sawn again. In the process of re-finishing, e.g. from 1 mm to 100 mm may be sawn from each edge. The process of re-finishing may be taken into account already when determining the width w1, w2 of the defected area. For example, if it is known that an amount (e.g. 5 mm) will be sawn in the re-finishing process, the widths w1, w2 may be decreased by the same amount.

In general, a width of the first side piece 312 may be e.g. from 0.5 mm to 200 mm.

As indicated above, preferably also a second side piece 322 comprising the second unfinished side surface 320 is sawn from the wood laminate panel 300 to form a second finished side surface 321 to the wood laminate panel 300. Moreover, preferably also the second side piece 322 is sawn after said transferring the panel 300 relative to the saw 541. An arrangement may comprise a second secondary saw 542 for the purpose. The second side piece 322 may be sawn in such a way that the second finished side surface 321 is opposite to the first finished side surface 311.

Preferably, the method further comprises sawing the wood laminate panel 300 to at least two pieces of wood laminate panel, each piece of wood laminate panel having a first finished side surface, a second finished side surface, a first finished end surface, and a second finished end surface. In this way, a large panel can be saw to at least two smaller finished pieces of wood laminate panels. Referring to Fig. 5, the panel may be sawn in such a way e.g. by a further saw 543. The corresponding arrangement comprises at least a further secondary saw 543, configured to saw the wood laminate panel 300 to at least two pieces of wood laminate panel, each piece of wood laminate panel having a first finished side surface, a second finished side surface, a first finished end surface, and a second finished end surface.

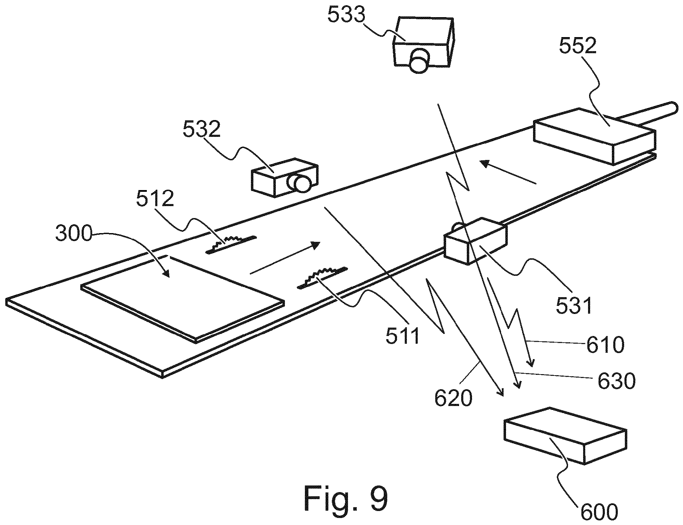

As indicated above, the wood laminate panel comprises also a main surface 301, such as a top surface 301. Referring to Fig. 9, an embodiment of the method comprises imaging the main surface 301 to receive information 630 indicative of the shape of the wood laminate panel 300. The method further comprise determining, using the also the information 630 indicative of the shape of the wood laminate panel 300, the information indicative of the width w1, w2 of a defected area 315 near the first unfinished side surface 310 of the wood laminate panel 300. A corresponding arrangement comprises a further optical detector 533 configured to image the main surface 301 of the wood laminate panel 300. The further optical detector 533 is configured to give information 630 indicative of the shape of the wood laminate panel 300. Moreover, the control unit 600 is configured to determine the width w1, w2 of the defected area 315 by using also the information 630 indicative of the shape of the wood laminate panel 300.

Imaging different surfaces will provide more information related to the width of the defected area 315. Therefore, the width w1, w2 of the defected area 315 can be determined more accurately by using such additional imaging means 533 and such further information 630. The shape of the panel 300 may refer e.g. to the skewness of the (unfinished) wood laminate panel 300. Skewness may be related e.g. to the value of a maximum angle of a tetragon, such as a maximum angle of a parallelogram. However, the shape of the unfinished wood laminate panel may be, in the alternative, irregular quadrilateral. By finishing, a rectangular shape is obtained, as detailed above.

When the wood laminate panel 300 is a plywood panel 300, the wood laminate panel (i.e. plywood panel in that case) typically comprises at least three layers (110, 120, 130) comprising wood. Moreover, in a plywood panel 300, a layer (110, 120, 130, 140, 150) comprises at least one wooden veneer 112 having been manufactured by one of rotary cutting, flat slicing, quarter slicing, half-round slicing, rift cutting, and sawing. Preferably all such layers that comprise wood comprises a wooden veneer having been manufactured by one of rotary cutting, flat slicing, quarter slicing, half-round slicing, rift cutting, and sawing. Rotary cutting may also be referred to as rotary peeling, turning, or rotary turning. A layer 110 may comprise more than one veneers 112. However, in typical plywood panel, each layer 110 comprises only one wooden veneer 112. Such a structure improves the determinability of the width w1, w2 of the defected area 315.

Moreover, a plywood panel 300 typically comprises phenol resin or polyphenol as the adhesive 195 in between the layers comprising wood. Also other adhesives can be used. The adhesive may be selected from the group of phenolic resin, phenol-formaldehyde, urea-melamine, melamine formaldehyde, resorcinol, thermoplastics, and a lignin-based adhesive. Herein the term lignin-based adhesive refers to an aqueous binder composition comprising at least some polymerizable substance and some crosslinking agent, wherein at least 20 weight-% of the polymerizable substance originates from lignin. Preferably the crosslinking agent is selected from the group of aldehydes. Preferably the crosslinking agent is selected from the group consisting of an aromatic aldehyde, glyoxal, furfuryl alcohol, caprolactam, and glycol compounds. Preferably the crosslinking agent is formaldehyde or paraformaldehyde or a combination thereof. More specific examples of lignin-based adhesives usable in the present invention can be found from the publication WO2015/114195. Thermoplastics refer to materials that become pliable or moldable above a deflection temperature (i.e. melting point) and solidify upon cooling. The deflection temperature of the thermoplastic may be e.g. from 80 °C to 200 °C, such as from 120 °C to 170°C.

A layer 110, 120 of the panel 300 may comprise softwood and/or a layer 120, 110 of the panel 300 may comprise hardwood. It is possible that a top layer (and a bottom layer) comprises hardwood, while other layers comprise softwood. Preferably, a layer 110, 120 of the panel 300 comprises softwood, such as spruce, pine, or cedar.

The thickness of a layer 110, 120 comprising wood is preferably from 0.1 mm to 4.0 mm, such as from 0.2 mm to 4.0 mm, such as from 1.2 mm to 3.6 mm, such as 2.6 mm or 3.2 mm. Moreover, preferably the number of layers 110, 120 comprising wood of the panel 300 is at least 3, or at least 5. Moreover, preferably, the wood laminate panel 300 is symmetric about a central plane CP (see Fig. 8) having a surface normal parallel to the thickness T of the panel 300. For example, the number of layers 110, 120 comprising wood may be odd. All these improve the determinability of the width w1, w2 of the defected area 315. Furthermore, preferably, the thickness of the wood laminate panel is in the range from 5 mm to 60 mm, such as from 8 mm to 25 mm.

Referring to Fig. 8, in an embodiment, the first layer 110 of the wood laminate panel comprises wood having a first grain direction 710, and the second layer 120 of the wood laminate panel comprises wood having a second grain direction 720. In Fig. 8, the first grain direction 710 (indicated by an arrow) is parallel to the plane of paper and perpendicular to the thickness T of the panel 300. In Fig. 8, the second grain direction 720 (indicated by a cross mark) is perpendicular to the plane of paper and perpendicular to the thickness of the panel 300. In an embodiment, the angle between the first grain direction 710 and the second grain direction 720 is from 60 to 120 degrees, such as from 85 to 95 degrees, such as 90 degrees. This has the beneficial effect that the image of the finished side surface shows some layers with a different appearance than some other layers, depending on the grain direction. Therefore, the determination of the width of the defected area becomes easy. Typically, when the grain direction is parallel to the plane of the image, the layer in the image seems more reflective than the other layers. Correspondingly, when the grain direction is perpendicular to the plane of the image, the layer in the image seems blurred relative to the other layers. This also improves the determinability of the width w1, w2 of the defected area.

In Fig. 8, the layers having the cross-wise grain direction are neighboring layers, i.e. no other wooden layers are arranged in between the first layer 110 and the second layer 120. However, as known in the field of wood laminate structures, other layers may be arranged in between the layers of which grain directions are cross-wise. In the art, a layer comprising wood having grains oriented in the direction of the length of the panel are commonly denoted by "|". Moreover, in the art, a layer comprising wood having grains oriented in the direction of the width of the panel are commonly denoted by "-". Using this convention, the structure of Fig. 8 can be denoted by |-|-| (provided that the length of the panel of Fig. 8 is in the horizontal direction). Structures like -|-|- (five layers), ||-|| (five layers), |--| (four layers), ||-|-|| (seven layers), |-|-||-|-| (ten layers), and |- (two layers) are also possible, as known to a skilled person.

In an embodiment, wood laminate panel 300 comprises at least three layers comprising wood. This also improves the accuracy for determining the width w1, w2 of the defected area.

Referring to Figs. 7 and 8, in an embodiment, the first layer 110 of the wood laminate panel 300 is a top layer of the panel 300. Therefore, the first layer 110 of the wood laminate panel 300 comprises a main surface 301 of the wood laminate panel 300, such as the top surface. The first layer 110 comprises wood having a first grain direction 710. Moreover, in an embodiment, the first grain direction 710 is substantially parallel to the second surface normal N2. Thus, the first grain direction 710 is substantially from the first unfinished end surface 330 to the second unfinished end surface 340. The first grain direction 710 may be parallel to the surface normal of a finished end surface 331, 341. This may be e.g. substantially the same direction, in which the finished end surface is imaged. When such imaged, the top layer is less reflective that in the case, the grains were oriented differently. This helps the determination of the width of the defected area. Even if not shown in the figures, the first grain direction 710 may be substantially parallel to the second surface normal N1. Thus, the first grain direction 710 may be substantially from the first unfinished side surface 310 to the second unfinished side surface 320.

With reference to Figs. 4 and 5, in an embodiment of the method, before sawing from the wood laminate panel 300 the first end piece 332, the first unfinished end surface 330, which is comprised by the first end piece 332, is aligned relative to a an end alignment position using an end aligner 551. As indicated in Figs. 1a1 to 1a3 and 1b1 to 1b3, also the unfinished end surface 330 may be a hard end in the aforementioned meaning. This improves the alignment of the panel 300 already at the first saw 511.

When transferring (i.e. moving) the wood laminate panel 300 relative to the saw 541, by using the width w1, w2 of the defected area 315, in such a way that the defected area 315 can be sawn by the saw 541, there are multiple options. For example, the saw 541 (and/or the second secondary saw 542) may be moved relative to the wood laminate panel 300. Typically, however, it is easier to move the panel 300 relative to the saw 541. Moreover, one can use e.g. a photodetector and/or an acoustic detector to determine the location of the first unfinished side surface 310 of the panel and move the panel and/or the saw accordingly. For example, the position of the first unfinished side surface 310 may be determined, and thereafter the panel may be moved by a distance determined by the initial location of the first unfinished side surface 310, the width w1, w2 of the defected area, and the location of the saw 541. In the alternative, the position of the first unfinished side surface 310 may be determined real-time while moving the panel 300, and when the unfinished side surface 310 is determined to be at a proper location, the movement is stopped.

However, referring to Figs. 4 and 5 in a preferable embodiment, a side stopper 552 is used for the purpose. Preferably, the side stopper 552 is a mechanical wall configured to stop the movement of the panel 300. Correspondingly, the wood laminate panel 300 can be moved, e.g. on a conveyor 561, towards the side stopper 552 as long as the first unfinished side surface 310 makes a contact with the side stopper 552. Thereafter, the wood laminate panel 300 may be moved along the side stopper 552 towards the saw 541, such as the first secondary saw 541, to saw the first side piece 312. As is implicit, in the embodiment, the side stopper 552 is moved relative to a saw 541, such as the first secondary saw 541, by using the width w1, w2 of the defected area 315 near the first unfinished side surface 310 of the wood laminate panel 300. A corresponding arrangement comprises the side stopper 552, which is configured to receive the first unfinished side surface 310 of the wood laminate panel 300. The arrangement comprises means 553 (Fig. 5) for moving the side stopper 552 relative to the first secondary saw 541 in response to a signal 640 from the control unit 600. The means 553 for moving the side stopper 552 may comprise e.g. a hydraulic piston. In addition or alternatively, the means 553 for moving the side stopper 552 may comprise e.g. a nut and a threaded rod; whereby the mutual rotation of the nut and the rod move one relative to the other.

In the embodiment, the control unit 600 is configured to move the side stopper 552 relative to the first secondary saw 541 by using [a] the width w1, w2 of the defected area 315 near the first unfinished side surface 310 of the wood laminate panel 300 and [b] the means 553 for moving the side stopper 552 relative to the first secondary saw 541.

The information indicative of the width w1, w2 of the defected area may be utilized also in an additional way.

In an embodiment, panels 300 are typically sawn with an additional saw 543 (Fig. 5) to two pieces of wood laminate panels with finished side surfaces and finished end surfaces. Referring to Fig. 10, typically the unfinished wood laminate panel 300 comprises a good area having a width wND that is long enough for two finished pieces of wood laminate panels of sufficient quality to be sawn therefrom. However, occasionally it may happen that the defected area 315 is so wide, and correspondingly the good area so narrow, that only one finished piece of wood laminate panel free from defects can be sawn from the unfinished wood laminate panel. As for the terms, it is noted that the good area is not necessarily completely free from defects. The good area corresponds to an area having so small defects that a piece of wood laminate, sawn from the good area, has a quality that fulfills the quality requirements. As evident, a portion of panel may be considered to be either defected or good, depending on the quality of that portion.

Therefore, an embodiment comprises determining information indicative of a width wND of a good area of the wood laminate panel 300 by using the first 610 and second 620 information indicative of the structure of the wood laminate panel. Optionally also the information 630 indicative of the shape of the wood laminate panel can be used to determine the width wND of the good area of the wood laminate panel.

Moreover, provided that the width wND of the good area of the wood laminate panel 300 exceeds a limit (or is at least the limit), the wood laminate panel 300 is sawn to at least two finished pieces of wood laminate panel, each finished piece of wood laminate panel having a first finished side surface, a second finished side surface, a first finished end surface, and a second finished end surface. In a preferred embodiment, each such piece of wood laminate panel has also the same length as the other piece of the panel. In a preferred embodiment, each such piece of wood laminate panel has also the same width as the other piece of the panel. Thus they have the same size; the size referring to the area of the panel, i.e. length multiplied by the width.

However, provided that the width wND of the good area of the wood laminate panel does not exceed the limit (or is less than the limit), only one finished piece of wood laminate panel having a first finished side surface, a second finished side surface, a first finished end surface, and a second finished end surface is produced. For example, if the width w1 of the defected area is large, and correspondingly the width wND of the good area is small, one may move the side stopper 552 in such a way that the additional secondary saw 543 (Fig. 5), which normally divides a panel to two finished parts, is used as the second secondary saw, i.e. used to saw a reasonably wide second side piece 322 from the panel 300; and thereby producing only one panel having all the four edges finished.

In the alternative, provided that the width wND of the good area of the wood laminate panel does not exceed the limit, it may be possible to saw the panel 300 to two or at least two finished pieces of wood laminate panel (i.e. each finished piece of wood laminate panel having a first finished side surface, a second finished side surface, a first finished end surface, and a second finished end surface). However, in that case, one of the pieces may be smaller than the other(s). With reference to Fig. 5, it is might be possible, e.g. to move the saw 542 with the means 572 for moving the saw, in addition to moving the side stopper 552. Thus, provided that the width wND of the good area would be too small for obtaining two large pieces, the saw 542 could be moved towards the saw 543 in order to obtain two finished pieces of panels, of which one would be narrower than the other. Naturally it might be possible to move also the saw 543 in such a way that two pieces of same size would be made. However, then both these pieces would be smaller than a typical panel. In practice, this may lead to logistics problems later on in the process, since panels of many different sizes could be produces. Thus, in an embodiment, the saws 541 and 542 are not moved relative to each other for at least a period of time. Moreover, in an embodiment, the saws 511 and 512 are not moved relative to each other for at least the period of time. Moreover, in an embodiment, the saw 543 is not moved relative to either the saw 541 or the saw 542 for at least the period of time. Herein the period of time may correspond to the period in which at least ten or at least fifty panels are finished.

To determine the width wND of the good area, information indicative of the structure of the substantially whole finished end surface (first finished end surface 331, and/or second finished end surface 341) may be needed. Therefore, and embodiment comprises taking multiple first images of the first finished end surface, and determining the width of a good area of the wood laminate panel by using the multiple first images. In the alternative, the method comprises taking multiple second images of the second finished end surface, and determining the width of the good area of the wood laminate panel by using the multiple second images. Preferably, the method further comprises taking the aforementioned multiple first and second images of the first and second finished end surfaces, and determining the width of the good area of the wood laminate panel by using the multiple first images and the multiple second images.

In this way, typically at least one (finished) wood laminate panel can be produced from an (unfinished) wood laminate panel. Compared to a known method, wherein the width of the first side piece 312 is independent of the width w1 of the defected area 315, the yield of the process increases. In the known method the finished panel more rarely fulfills the quality requirements and become waste. In particular, when a large panel is typically used to produce two pieces of finished panels, the presented method increases yield, since only one finished panel may be produced in the case, where the good area of the panel is narrow. Moreover, when a large panel is typically used to produce two pieces of finished panels, the presented method increases the likelihood that two pieces of finished panels can be produced from the wood laminate panel. This happens, because the width of the first side piece can be optimized according to the true structure of the wood laminate panel. This also increases the process yield.

In practice, the method is applied to a sequence of panels, e.g. in a factory. Moreover, the width of the first side piece 312 is determined individually for each panel 300 to improve the process yield and the quality of the panels such produced. Thus, an embodiment comprises finishing a primary wood laminate panel and finishing a secondary wood laminate panel. By finishing, the process of sawing the edges, as described above, is meant.

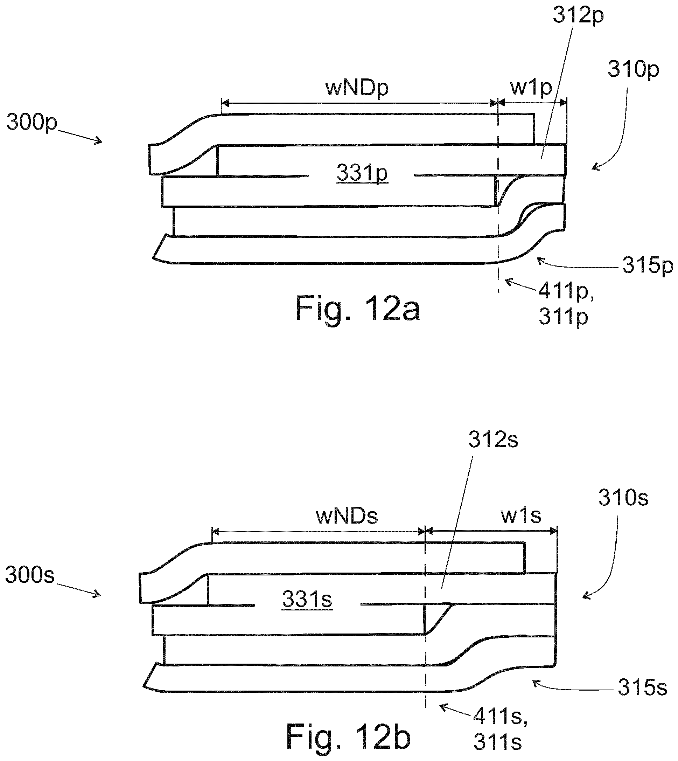

Referring to Figs. 12a and 12b, the embodiment comprises sawing the edges of the primary wood laminate panel 300p, thereby imaging the first finished end surface 331p of the primary panel 300p to obtain information indicative of the width w1p of the defected area 315p of the primary panel 300p and sawing from the primary wood laminate panel 300p a primary first side piece 312p comprising the defected area 315p of the primary wood laminate panel 300p. The defected area 315p of the primary wood laminate panel has the primary width w1p. The primary first side piece 312p is sawn along a primary sawing line 411p, thereby forming the first finished side surface 311p of the primary panel 300p. Even if not shown, the second finished end surface 341 of the primary panel 300p is also imaged, as indicated above.

After having sawn the edges of the first primary panel 300p, a secondary panel 300s is finished. Referring to Fig. 12b, the embodiment further comprises sawing the edges of the secondary wood laminate panel 300s, thereby imaging the first finished end surface 331s of the secondary panel 300s to obtain information indicative of the width w1s of the defected area 315s of the secondary panel 300s and sawing from the secondary wood laminate panel 300s a secondary first side piece 312s comprising the defected area 315s of the secondary wood laminate panel 300s. The defected area 315s of the secondary wood laminate panel has the secondary width w1s. The secondary first side piece 312s is sawn along a secondary sawing line 411s, thereby forming the first finished side surface 311s of the secondary panel 300s. Even if not shown, the second finished end surface 341 of the secondary panel 300s is also imaged, as indicated above.

Since the method is applied individually for each wood laminate panel 300p and 300s, the secondary width w1s is different from the primary width w1p. Therefore, such side pieces 312p, 312s are sawn from the panels that the width of the secondary first side piece 312s is different from the width of the primary first side piece 312p. For example, the difference between the width of the secondary first side piece 312s and the primary first side piece 312p may be at least 2 mm, such as at least 5 mm. Moreover, the width of the primary side piece 312p correlates positively with the width w1p of the defected area 315p of the primary panel 300p. Correspondingly, a width wNDp of a good area of the primary panel 300a is different from a width wNDs of a good area of the secondary panel 300b.

As indicated above, the information indicative of the width wNDp of the good area of the primary panel 300p may be used to determine how many pieces of finished wood laminate panel of a predetermined size are obtainable from the primary wood laminate panel 300p; and the primary wood laminate panel may be sawn into that number of pieces of finished wood laminate panel. Correspondingly, the information indicative of the width wNDs of the good area of the secondary panel 300s may be used to determine how many pieces of finished wood laminate panel of a predetermined size are obtainable from the secondary wood laminate panel 300s; and the secondary wood laminate panel may be sawn into that number of pieces of finished wood laminate panel. In the examples of Figs. 12a and 12b wNDs is less than wNDp. Therefore, in that embodiment, it is possible that only one finished wood laminate panel having a predetermined size may be obtained from the secondary wood laminate panel 300s, while two pieces of finished wood laminate panels having the same predetermined size may be obtained from the primary wood laminate panel 300p.

As indicated above, the method is applied in a factory, such as a plywood mill. Thus, for process efficiency, the first side piece 312 is sawn relatively soon after imaging the first finished end surface 331. In a preferred embodiment, at least a part of the first finished end surface 331 of a wood laminate panel 300 is imaged at a first instance of time t1. Moreover, the first side piece 312 is sawn from of the wood laminate panel during a time interval comprising a second instance of time t2. Furthermore, for process efficiency, the second instance of time t2 is at most 5 s, preferably at most 2 s, such as at most 1 s later than the first instance of time t1.

In a typical embodiment, the length L and width W of the wood laminate panel 300, before finishing are both somewhat more than 8 feet (i.e. 244 cm). The panel 300 is finished by sawing the two side pieces 312, 322 and the two end pieces 332, 342. The side pieces 312, 322 are sawn along the sawing lines 421 and 411, while the end pieces 332, 342 are sawn along the sawing lines 431 and 441 (see Fig. 3). Moreover, the panel is sawn once at the center to form two wood laminate panels, each having a length of 8 feet and a width of 4 feet (i.e. 122 cm). In another typical embodiment, the length L of the wood laminate panel 300, before finishing, is somewhat more than 8 feet (i.e. 244 cm), and the width W of the wood laminate panel, before finishing is somewhat more than 4 feet (i.e. 122 cm). The panel is finished by sawing the two side pieces 312, 322 and the two end pieces 332, 342 as discussed above. Such a panel needs not to be sawn into two finished pieces. Other typical sizes of plywood panels include a width W from 4 feet to 9 feet by a length L from 4 feet to 12 feet; i.e. from 1200 mm by 1200 mm to 2700 mm by 3600 mm.

After finishing the wood laminate panel 300 by sawing off a piece from all the four edges, as discussed above, the finished wood laminate panel 300 is subjected to visual quality observation. Information from the visual quality observation is used, in an embodiment, to move the position of the end aligner 551 relative to the first primary saw 511 (see Fig. 5). For example, if the visual observation reveals that many finished panels have a first finished end surface 331 (see Fig. 4), of which quality is not high enough, the end aligner 551 may be moved relative to the first primary saw 511 in such a way that a wider first end piece 332 will be sawn. Correspondingly, if the visual observation reveals that many finished panels have a second finished end surface 341 (see Fig. 4), of which quality is not high enough, the end aligner 551 may be moved relative to the first primary saw 511 in such a way that a narrower first end piece 332 will be sawn.

## Claims

1. A method for sawing edges (310, 320, 330, 340) of a wood laminate panel (300), the wood laminate (300) panel having
- a length (L), a width (W), and a thickness (T), wherein the thickness (T) is smaller than the smaller of the length (L) and the width (W),
- a first unfinished side surface (310) having a first surface normal (N1) substantially parallel to the length (L) or the width (W),
- a second unfinished side surface (320) opposite to the first unfinished side surface (310),
- a first unfinished end surface (330) having a second surface normal (N2) substantially perpendicular to the thickness (T) and the first surface normal (N1),
- a second unfinished end surface (340) opposite to the first unfinished end surface (330), the wood laminate panel (300) comprising
- a first layer (110) comprising wood and a second layer (120) comprising wood, the first and the second layers (110, 120) arranged relative to each other in the direction (Sz) of thickness (T) and
- adhesive (195) in between the first layer (110) and the second layer (120);
the method comprising
- sawing from the wood laminate panel (300) a first end piece (332) comprising the first unfinished end surface (330), thereby forming a first finished end surface (331) to the wood laminate panel (300),
- sawing from the wood laminate panel (300) a second end piece (342) comprising the second unfinished end surface (340), thereby forming a second finished end surface (341) to the wood laminate panel (300) **characterised by**,
- imaging at least such a part of the first finished end surface (331) that is near the first unfinished side surface (310), thereby receiving first information (610) indicative of the structure of the wood laminate panel (300),
- imaging at least such a part of the second finished end surface (341), that is near the first unfinished side surface (310), thereby receiving second information (620) indicative of the structure of the wood laminate panel (300),
- determining, using the first information (610) and the second information (620) indicative of the structure of the wood laminate panel (300), information indicative of a width (w1, w2) of a defected area (315) near the first unfinished side surface (310) of the wood laminate panel (300),
- moving the wood laminate panel (300) and/or a saw (541) relative to each other, by using the information indicative of the width (w1, w2) of the defected area (315) near the first unfinished side surface (310) of the wood laminate panel (300), in such a way that the defected area (315) can be sawn by the saw (541),
- sawing from the wood laminate panel (300) a second side piece (322) comprising the second unfinished side surface (320), thereby forming a second finished side surface (321) to the wood laminate panel (300), and
- after said moving the wood laminate panel (300) and/or the saw (541) relative to each other, sawing from the wood laminate panel (300) a first side piece (312) comprising the defected area (315) and the first unfinished side surface (310), thereby forming a first finished side surface (311) to the wood laminate panel (300).

2. The method of claim 1, wherein
- the wood laminate panel (300) comprises a main surface (301) having a third surface normal (N3) substantially parallel to the thickness (T) of the wood laminate panel (300), the method comprising
- imaging at least a part of the main surface (301), thereby receiving information (630) indicative of the shape of the wood laminate panel (300) and
- determining, using the also the information (630) indicative of the shape of the wood laminate panel (300), the information indicative of the width (w1, w2) of the defected area (315) near the first unfinished side surface (310) of the wood laminate panel (300).

3. The method of claim 1 or 2, comprising
- moving a side stopper (552) relative to a saw (541), by using the information indicative of the width (w1, w2) of the defected area (315) near the first unfinished side surface (310) of the wood laminate panel (300) and
- moving the wood laminate panel (300) towards the side stopper (552) until the first unfinished side surface (310) of the wood laminate panel makes a contact with the side stopper (552),
preferably the method further comprises
- moving the wood laminate panel (300) along the side stopper (552) towards the saw (541) to saw the first side piece (312).

4. The method of any of the claims 1 to 3, wherein
- the first layer (110) of the wood laminate panel comprises wood having a first grain direction (710), and
- the second layer (120) of the wood laminate panel comprises wood having a second grain direction (720), wherein
- the angle between the first grain direction (710) and the second grain direction (720) is from 60 to 120 degrees, such as from 85 to 95 degrees, such as 90 degrees.

5. The method of any of the claims 1 to 4, wherein
- the first layer (710) of the wood laminate panel comprises
∘ a main surface (301) of the wood laminate panel or the main surface of claim 2, wherein the main surface (301) has a third surface normal (N3) substantially parallel to the thickness (T) of the wood laminate panel (300) and
∘ wood having a first grain direction (710), wherein
- the first grain direction (710) is substantially parallel to the second surface normal (N2).

6. The method of any of the claims 1 to 5, wherein
- the wood laminate panel comprises at least three layers (110, 120, 130, 140, 150) comprising wood, and/or
- a layer (110) of the wood laminate panel comprises at least one wooden veneer (112) having been manufactured by one of rotary cutting, flat slicing, quarter slicing, half-round slicing, rift cutting, and sawing and/or
- a layer (110) of the wood laminate panel comprises at least one wooden veneer (112) that comprises softwood.

7. The method of any of the claims 1 to 6, comprising
- manufacturing the wood laminate panel before sawing the first end piece (312) from the wood laminate panel (300) by
- aligning an edge (111a) of the first layer (110) to a side alignment position (200), and
- aligning an edge (121a) of the second layer (120) to the side alignment position (200), whereby
- the first unfinished side surface (310) of the wood laminate panel (300) comprises the edge (111a) of the first layer (110) and the edge (121a) of the second layer (120).

8. The method of claim 7, wherein the manufacturing of the wood laminate panel further comprises
- aligning another edge (111b) of the first layer (110) to a another side alignment position (205), and
- aligning another edge (121b) of the second layer (120) to the other side alignment position (205), whereby
- the first unfinished end surface (330) of the wood laminate panel (300) comprises the other edge (111b) of the first layer (110) and the other edge (121b) of the second layer (120), the method comprising, before said sawing from the wood laminate panel (300) a first end piece (332) comprising the first unfinished end surface (330)
- aligning the first unfinished end surface (330) to an end alignment position using an end aligner (551).

9. The method of any of the claims 1 to 8, comprising
- determining information indicative of a width (wND) of a good area of the wood laminate panel by using the first information (610) indicative of the structure of the wood laminate panel (300) and optionally also at least one of [i] the second (620) information indicative of the structure of the wood laminate panel, and [ii] the information (630) indicative of the shape of the wood laminate panel (300); and
- provided that the width (wND) of the good area of the wood laminate panel (300) exceeds a limit, sawing the wood laminate panel (300) to at least two finished pieces of wood laminate panel, each finished piece of wood laminate panel having a first finished side surface, a second finished side surface, a first finished end surface, and a second finished end surface, such that all the thus sawn finished pieces of wood laminate panel having the same first size,
- otherwise,
∘ producing only one finished piece of wood laminate panel (300) having the first finished side surface (311), the second finished side surface (321), the first finished end surface (331), and the second finished end surface (341) or
∘ sawing the wood laminate panel (300) to at least two finished pieces of wood laminate panel, each finished piece of wood laminate panel having a first finished side surface, a second finished side surface, a first finished end surface, and a second finished end surface, such that one of the thus sawn finished pieces of wood laminate panel is smaller than another thus sawn finished pieces of wood laminate panel or
∘ sawing the wood laminate panel (300) to at least two finished pieces of wood laminate panel, each finished piece of wood laminate panel having a first finished side surface, a second finished side surface, a first finished end surface, and a second finished end surface, such that all the thus sawn finished pieces of wood laminate panel having the same second size, wherein the second size is smaller than the first size.

10. A method for finishing edges of two panels, comprising
- according to the method of any of the claims 1 to 9, sawing at least two edges of a primary wood laminate panel (300p), thereby sawing from the primary wood laminate panel (300p) a primary first side piece (312p) comprising the defected area (315p) of the primary wood laminate panel (300p), the defected area (315p) of the primary wood laminate panel (300p) having a primary width (w1p), and
- according to the method of any of the claims 1 to 9, sawing at least two edges of a secondary wood laminate panel (300s), thereby sawing from the secondary wood laminate panel (300s) a secondary first side piece (312s) comprising the defected area (315s) of the secondary wood laminate panel (300s), the defected area (315s) of the secondary wood laminate panel (300s) having a secondary width (w1s), wherein
- the secondary width (w1s) is different from the primary width (w1p), whereby
- a width of the secondary first side piece (312s) is different from a width of the primary first side piece (312p).

11. An arrangement, comprising
- a first primary saw (511) configured to saw from a wood laminate panel (300) a first end piece (332) comprising a first unfinished end surface (330) of the wood laminate panel (300), to form a first finished end surface (331) to the wood laminate panel (300),
- a second primary saw (512) configured to saw from the wood laminate panel (300) a second end piece (342) comprising a second unfinished end surface (340) of the wood laminate panel, to form a second finished end surface (341) to the wood laminate panel (300), wherein the second unfinished end surface (340) of the wood laminate panel (300) is opposite to the first unfinished end surface (330) of the wood laminate panel (300),
- a first secondary saw (541) configured to saw from the wood laminate panel (300) a first side piece (312) comprising the first unfinished side surface (310) of the wood laminate panel (300) and a defected area (315),
- a second secondary saw (542) configured to saw from the wood laminate panel (300) a second side piece (322) comprising a second unfinished side surface (320) of the wood laminate panel (300), wherein the second unfinished side surface (320) of the wood laminate panel (300) is opposite to the first unfinished side surface (310) of the wood laminate panel (300), and
- means (561, 571, 552) for moving the wood laminate panel (300) and/or the first secondary saw (541) relative to each other,
- the first unfinished side surface (310) of the wood laminate panel (300) has a first surface normal (N1) substantially parallel to a width (W) or a length (L) of the wood laminate panel (300), and
- the first unfinished end surface (330) of the wood laminate panel has a second surface normal (N2) substantially perpendicular to the thickness (T) of the wood laminate panel and the first surface normal (N1),
**characterised by**
- a first optical detector (531) configured to image at least such a part of the first finished end surface (331) that is near a first unfinished side surface (310) of the wood laminate panel (300), and to give first information (610) indicative of the structure of the wood laminate panel (300),
- a second optical detector (532) configured to image the second finished end surface (341) and to give second information (620) indicative of the structure of the wood laminate panel (300),
- a control unit (600), configured to determine information indicative of a width (w1, w2) of the defected area (315) near the first unfinished side surface (310) of the wood laminate panel (300) using the first information (610) and the second information (620) indicative of the structure of the wood laminate panel (300), wherein
- the control unit (600) is configured to control the means (561, 571, 552) for moving the wood laminate panel (300) and/or the first secondary saw (541), by using the information indicative of the width (w1, w2) of the defected area (315) near the first unfinished side surface (310) of the wood laminate panel (300).

12. The arrangement of claim 11, comprising
- a further optical detector (533) configured to
∘ image a main surface (301) of the wood laminate panel (300) and
∘ give information (630) indicative of the shape of the wood laminate panel (300), wherein
- the main surface (301) of the wood laminate panel (300) has a surface normal (N3) substantially parallel to the thickness (T) of the wood laminate panel (300), and
- the control unit (600) is configured to determine the information indicative of the width (w1, w2) of the defected area (315) near the first unfinished side surface (310) of the wood laminate panel (300) by using also the information (630) indicative of the shape of the wood laminate panel (300).

13. The arrangement of claim 11 or 12, comprising
- a side stopper (552), configured to receive the first unfinished side surface (310) of the wood laminate panel (300) and
- means (553) for moving the side stopper (552) relative to the first secondary saw (541) in response to a signal (640) from the control unit (600), wherein
- the control unit (600) is configured to move the side stopper (552) relative to the first secondary saw (541) by using
∘ the information indicative of the width (w1, w2) of the defected area (315) near the first unfinished side surface (310) of the wood laminate panel (300) and
∘ the means (553) for moving the side stopper (552) relative to the first secondary saw (541).

14. The arrangement of any of the claims 11 to 13, comprising
- a further secondary saw (543), configured to saw the wood laminate panel (300) to at least two pieces of wood laminate panel, each piece of wood laminate panel having a first finished side surface, a second finished side surface, a first finished end surface, and a second finished end surface.

15. The arrangement of any of the claims 11 to 14, comprising
- a conveyor (210) and a side aligner (200) that are, in combination, configured to align
∘ an edge (111a) of a first layer (110) of the wood laminate panel (300) to an alignment position and
∘ an edge (121a) of a second layer (120) of the wood laminate panel (300) to the alignment position in such a way that
∘ the first unfinished side surface (310) of the wood laminate panel (300) comprises the edge (111a) of the first layer (110) and the edge (121a) of the second layer (120), wherein
- the arrangement comprises a conveyor for moving the wood laminate panel to the first secondary saw (541) in such a way that the first secondary saw (541) is configured to saw from the wood laminate panel (300) the first side piece (312) comprising the first unfinished side surface (310).

16. The arrangement of claim 15, comprising
- a conveyor and a second side aligner (205) that are, in combination, configured to align
∘ another edge (111b) of a first layer (110) of the wood laminate panel (300) to another side alignment position and
∘ another edge (121b) of a second layer (120) of the wood laminate panel (300) to the other side alignment position in such a way that
∘ the first unfinished end surface (330) of the wood laminate panel (300) comprises the other edge (111b) of the first layer (110) and the other edge (121b) of the second layer (120), wherein
- the arrangement comprises a conveyor for moving the wood laminate panel to the first primary saw (511) in such a way that the first primary saw (511) is configured to saw from the wood laminate panel (300) the first end piece (332) comprising the first unfinished end surface (330).

## Patentansprüche

1. Verfahren zum Sägen der Kanten (310, 320, 330, 340) einer Holzlaminatplatte (300), wobei die Holzlaminatplatte (300) Folgendes aufweist:
- eine Länge (L), eine Breite (W) und eine Dicke (T), wobei die Dicke (T) kleiner als das Kleinere von der Länge (L) und der Breite (W) ist,
- eine erste unfertige Seitenfläche (310) mit einer ersten Flächennormalen (N1) im Wesentlichen parallel zur Länge (L) oder zur Breite (W),
- eine zweite unfertige Seitenfläche (320) gegenüber der ersten unfertigen Seitenfläche (310),
- eine erste unfertige Endfläche (330) mit einer zweiten Flächennormalen (N2) im Wesentlichen senkrecht zur Dicke (T) und der ersten Flächennormalen (N1),
- eine zweite unfertige Endfläche (340) gegenüber der ersten unfertigen Endfläche (330), wobei die Holzlaminatplatte (300) Folgendes umfasst:
- eine erste Schicht (110), die Holz umfasst, und eine zweite Schicht (120), die Holz umfasst, wobei die erste und die zweite Schicht (110, 120) in Richtung (Sz) der Dicke (T) relativ zueinander angeordnet sind, und
- Kleber (195) zwischen der ersten Schicht (110) und der zweiten Schicht (120);
wobei das Verfahren Folgendes umfasst:
- Absägen eines ersten Endstücks (332) von der Holzlaminatplatte (300), das die erste unfertige Endfläche (330) umfasst, wodurch eine erste fertige Endfläche (331) an der Holzlaminatplatte (300) ausgebildet wird,
- Absägen eines zweiten Endstücks (342) von der Holzlaminatplatte (300), das die zweite unfertige Endfläche (340) umfasst, wodurch eine zweite fertige Endfläche (341) an der Holzlaminatplatte (300) ausgebildet wird, **gekennzeichnet durch**
- Abbilden mindestens eines solchen Teils der ersten fertigen Endfläche (331), der sich in der Nähe der ersten unfertigen Seitenfläche (310) befindet, wodurch erste Informationen (610) erhalten werden, die für die Struktur der Holzlaminatplatte (300) bezeichnend sind,
- Abbilden mindestens eines solchen Teils der zweiten fertigen Endfläche (341), der sich in der Nähe der ersten unfertigen Seitenfläche (310) befindet, wodurch zweite Informationen (620) erhalten werden, die für die Struktur der Holzlaminatplatte (300) bezeichnend sind,
- Ermitteln von Informationen, die bezeichnend für eine Breite (w1, w2) eines defekten Bereichs (315) in der Nähe der ersten unfertigen Seitenfläche (310) der Holzlaminatplatte (300) sind, unter Verwendung der ersten Informationen (610) und der zweiten Informationen (620), die für die Struktur der Holzlaminatplatte (300) bezeichnend sind,
- Bewegen der Holzlaminatplatte (300) und/oder einer Säge (541) relativ zueinander unter Verwendung der Informationen, die für die Breite (w1, w2) des defekten Bereichs (315) in der Nähe der ersten unfertigen Seitenfläche (310) der Holzlaminatplatte (300) bezeichnend sind, derart, dass der defekte Bereich (315) durch die Säge (541) abgesägt werden kann,
- Absägen eines zweiten Seitenstücks (322) von der Holzlaminatplatte (300), das die zweite unfertige Seitenfläche (320) umfasst, wodurch eine zweite fertige Seitenfläche (321) an der Holzlaminatplatte (300) ausgebildet wird, und
- nach dem Bewegen der Holzlaminatplatte (300) und/oder der Säge (541) relativ zueinander, Absägen eines ersten Seitenstücks (312) von der Holzlaminatplatte (300), das den defekten Bereich (315) und die erste unfertige Seitenfläche (310) umfasst, wodurch eine erste fertige Seitenfläche (311) an der Holzlaminatplatte (300) ausgebildet wird.

2. Verfahren nach Anspruch 1, wobei
- die Holzlaminatplatte (300) eine Hauptfläche (301) mit einer dritten Flächennormalen (N3) im Wesentlichen parallel zur Dicke (T) der Holzlaminatplatte (300) umfasst, wobei das Verfahren Folgendes umfasst:
- Abbilden mindestens eines Teils der Hauptfläche (301), wodurch Informationen (630) erhalten werden, die für die Form der Holzlaminatplatte (300) bezeichnend sind, und
- Ermitteln der Informationen, die für die Breite (w1, w2) des defekten Bereichs (315) in der Nähe der ersten unfertigen Seitenfläche (310) der Holzlaminatplatte (300) bezeichnend sind, ebenfalls unter Verwendung der Informationen (630), die für die Form der Holzlaminatplatte (300) bezeichnend sind.

3. Verfahren nach Anspruch 1 oder 2, umfassend
- Bewegen eines Seitenanschlags (552) relativ zu einer Säge (541) unter Verwendung der Informationen, die für die Breite (w1, w2) des defekten Bereichs (315) in der Nähe der ersten unfertigen Seitenfläche (310) der Holzlaminatplatte (300) bezeichnend sind, und
- Bewegen der Holzlaminatplatte (300) in Richtung des Seitenanschlags (552) bis die erste unfertige Seitenfläche (310) der Holzlaminatplatte in Kontakt mit dem Seitenanschlag (552) tritt,
wobei das Verfahren vorzugsweise ferner Folgendes umfasst:
- Bewegen der Holzlaminatplatte (300) entlang des Seitenanschlags (552) in Richtung der Säge (541), um das erste Seitenstück (312) abzusägen.

4. Verfahren nach einem der Ansprüche 1 bis 3, wobei
- die erste Schicht (110) der Holzlaminatplatte Holz mit einer ersten Kornrichtung (710) umfasst und
- die zweite Schicht (120) der Holzlaminatplatte Holz mit einer zweiten Kornrichtung (720) umfasst, wobei
- der Winkel zwischen der ersten Kornrichtung (710) und der zweiten Kornrichtung (720) von 60 bis 120 Grad, wie etwa von 85 bis 95 Grad, wie etwa 90 Grad beträgt.

5. Verfahren nach einem der Ansprüche 1 bis 4, wobei
- die erste Schicht (710) der Holzlaminatplatte Folgendes umfasst:
∘ eine Hauptfläche (301) der Holzlaminatplatte oder die Hauptfläche des Anspruchs 2, wobei die Hauptfläche (301) eine dritte Flächennormale (N3) im Wesentlichen parallel zur Dicke (T) der Holzlaminatplatte (300) aufweist, und
∘ Holz mit einer ersten Kornrichtung (710), wobei
- die erste Kornrichtung (710) im Wesentlichen parallel zur zweiten Flächennormalen (N2) ist.

6. Verfahren nach einem der Ansprüche 1 bis 5, wobei
- die Holzlaminatplatte mindestens drei Schichten (110, 120, 130, 140, 150) umfasst, die Holz umfassen, und/oder
- eine Schicht (110) der Holzlaminatplatte mindestens ein Holzfurnier (112) umfasst, das durch eines von Rotationsschneiden, Flachmessern, Viertelmessern, Halbrundmessern, Riftschneiden und Sägen hergestellt worden ist, und/oder
- eine Schicht (110) der Holzlaminatplatte mindestens ein Holzfurnier (112) umfasst, das Weichholz umfasst.

7. Verfahren nach einem der Ansprüche 1 bis 6, umfassend
- Herstellen der Holzlaminatplatte vor dem Absägen des ersten Endstücks (312) von der Holzlaminatplatte (300) durch
- Ausrichten einer Kante (111a) der ersten Schicht (110) an einer Seitenausrichtungsposition (200) und
- Ausrichten einer Kante (121a) der zweiten Schicht (120) an der Seitenausrichtungsposition (200), wobei
- die erste unfertige Seitenfläche (310) der Holzlaminatplatte (300) die Kante (111a) der ersten Schicht (110) und die Kante (121a) der zweiten Schicht (120) umfasst.

8. Verfahren nach Anspruch 7, wobei die Herstellung der Holzlaminatplatte ferner Folgendes umfasst:
- Ausrichten einer weiteren Kante (111b) der ersten Schicht (110) an einer weiteren Seitenausrichtungsposition (205) und
- Ausrichten einer weiteren Kante (121b) der zweiten Schicht (120) an der weiteren Seitenausrichtungsposition (205), wodurch
- die erste unfertige Endfläche (330) der Holzlaminatplatte (300) die weitere Kante (111b) der ersten Schicht (110) und die weitere Kante (121b) der zweiten Schicht (120) umfasst, wobei das Verfahren vor dem Absägen eines ersten Endstücks (332) von der Holzlaminatplatte (300), das die erste unfertige Endfläche (330) umfasst, Folgendes umfasst:
- Ausrichten der ersten unfertigen Endfläche (330) an einer Endausrichtungsposition unter Verwendung einer Endausrichtungsvorrichtung (551).

9. Verfahren nach einem der Ansprüche 1 bis 8, umfassend
- Bestimmen von Informationen, die für eine Breite (wND) eines guten Bereichs der Holzlaminatplatte bezeichnend sind, unter Verwendung der ersten Informationen (610), die für die Struktur der Holzlaminatplatte (300) bezeichnend sind und wahlweise auch mindestens einem von [i] den zweiten (620) Informationen, die für die Struktur der Holzlaminatplatte bezeichnend sind, und [ii] den Informationen (630), die für die Form der Holzlaminatplatte (300) bezeichnend sind; und
- vorausgesetzt, dass die Breite (wND) des guten Bereichs der Holzlaminatplatte (300) eine Grenze überschreitet, Sägen der Holzlaminatplatte (300) in mindestens zwei fertige Stücke Holzlaminatplatte, wobei jedes fertige Stück Holzlaminatplatte eine erste fertige Seitenfläche, eine zweite fertige Seitenfläche, eine erste fertige Endfläche und eine zweite fertige Endfläche aufweist, so dass alle derart gesägten fertigen Stücke Holzlaminatplatte die gleiche erste Größe aufweisen,
- andernfalls
∘ Herstellen von lediglich einem fertigen Stück Holzlaminatplatte (300) mit der ersten fertigen Seitenfläche (311), der zweiten fertigen Seitenfläche (321), der ersten fertigen Endfläche (331) und der zweiten fertigen Endfläche (341) oder
∘ Sägen der Holzlaminatplatte (300) in mindestens zwei fertige Stücke Holzlaminatplatte, wobei jedes fertige Stück Holzlaminatplatte eine erste fertige Seitenfläche, eine zweite fertige Seitenfläche, eine erste fertige Endfläche und eine zweite fertige Endfläche aufweist, so dass eines der derart gesägten fertigen Stücke Holzlaminatplatte kleiner als ein anderes, derart gesägtes fertiges Stück Holzlaminatplatte ist, oder
∘ Sägen der Holzlaminatplatte (300) in mindestens zwei fertige Stücke Holzlaminatplatte, wobei jedes fertige Stück Holzlaminatplatte eine erste fertige Seitenfläche, eine zweite fertige Seitenfläche, eine erste fertige Endfläche und eine zweite fertige Endfläche aufweist, so dass alle derart gesägten fertigten Stücke Holzlaminatplatte die gleiche zweite Größe aufweisen, wobei die zweite Größe kleiner als die erste Größe ist.

10. Verfahren zum Fertigstellen von Kanten von zwei Platten, umfassend
- gemäß dem Verfahren nach einem der Ansprüche 1 bis 9 Sägen mindestens zweier Kanten einer primären Holzlaminatplatte (300p), wodurch ein primäres erstes Seitenstück (312p) von der primären Holzlaminatplatte (300p) abgesägt wird, das den defekten Bereich (315p) der primären Holzlaminatplatte (300p) umfasst, wobei der defekte Bereich (315p) der primären Holzlaminatplatte (300p) eine primäre Breite (w1p) aufweist, und
- gemäß dem Verfahren nach einem der Ansprüche 1 bis 9 Sägen mindestens zweier Kanten einer sekundären Holzlaminatplatte (300s), wodurch ein sekundäres erstes Seitenstück (312s) von der sekundären Holzlaminatplatte (300s) abgesägt wird, das den defekten Bereich (315s) der sekundären Holzlaminatplatte (300s) umfasst, wobei der defekte Bereich (315s) der sekundären Holzlaminatplatte (300s) eine sekundäre Breite (w1s) aufweist, wobei
- die sekundäre Breite (w1s) von der primären Breite (w1p) verschieden ist, wodurch
- eine Breite des sekundären ersten Seitenstücks (312s) von einer Breite des primären ersten Seitenstücks (312p) verschieden ist.

11. Anordnung, umfassend
- eine erste Hauptsäge (511), die dazu konfiguriert ist, ein erstes Endstück (332) von einer Holzlaminatplatte (300) abzusägen, das eine erste unfertige Endfläche (330) der Holzlaminatplatte umfasst, um eine erste fertige Endfläche (331) an der Holzlaminatplatte (300) auszubilden,
- eine zweite Hauptsäge (512), die dazu konfiguriert ist, ein zweites Endstück (342) von der Holzlaminatplatte (300) abzusägen, das eine zweite unfertige Endfläche (340) der Holzlaminatplatte (300) umfasst, um eine zweite fertige Endfläche (341) an der Holzlaminatplatte (300) auszubilden, wobei die zweite unfertige Endfläche (340) der Holzlaminatplatte (300) der ersten unfertigen Endfläche (330) der Holzlaminatplatte (300) gegenüberliegt,
- eine erste Nebensäge (541), die dazu konfiguriert ist, ein erstes Seitenstück (312) von der Holzlaminatplatte (300) abzusägen, das die erste unfertige Seitenfläche (310) der Holzlaminatplatte (300) und einen defekten Bereich (315) umfasst
- eine zweite Nebensäge (542), die dazu konfiguriert ist, ein zweites Seitenstück (322) von der Holzlaminatplatte (300) abzusägen, das eine zweite unfertige Seitenfläche (320) der Holzlaminatplatte (300) umfasst, wobei die zweite unfertige Seitenfläche (320) der Holzlaminatplatte (300) der ersten unfertigen Seitenfläche (310) der Holzlaminatplatte (300) gegenüberliegt, und
- Mittel (561, 571, 552) zum Bewegen der Holzlaminatplatte (300) und/oder der ersten Nebensäge (541) relativ zueinander,
- wobei die erste unfertige Seitenfläche (310) der Holzlaminatplatte (300) eine erste Flächennormale (N1) im Wesentlichen parallel zu einer Breite (W) oder einer Länge (L) der Holzlaminatplatte (300) aufweist, und
- wobei die erste unfertige Endfläche (330) der Holzlaminatplatte eine zweite Flächennormale (N2) im Wesentlichen senkrecht zur Dicke (T) der Holzlaminatplatte und der ersten Flächennormalen (N1) aufweist **gekennzeichnet durch**
- einen ersten optischen Detektor (531), der dazu konfiguriert ist, mindestens einen solchen Teil der ersten fertigen Endfläche (331) abzubilden, der sich in der Nähe einer ersten unfertigen Seitenfläche (310) der Holzlaminatplatte (300) befindet, und erste Informationen (610) zu geben, die für die Struktur der Holzlaminatplatte (300) bezeichnend sind,
- einen zweiten optischen Detektor (532), der dazu konfiguriert ist, die zweite fertige Endfläche (341) abzubilden und zweite Information (620) zu geben, die für die Struktur der Holzlaminatplatte (300) bezeichnend sind;
- eine Steuereinheit (600), die dazu konfiguriert ist, Informationen, die für eine Breite (w1, w2) des defekten Bereichs (315) in der Nähe der ersten unfertigen Seitenfläche (310) der Holzlaminatplatte (300) bezeichnend sind, unter Verwendung der ersten Informationen (610) und der zweiten Informationen (620), die für die Struktur der Holzlaminatplatte (300) bezeichnend sind, zu ermitteln, wobei
- die Steuereinheit (600) dazu konfiguriert ist, die Mittel (561, 571, 552) zum Bewegen der Holzlaminatplatte (300) und/oder der ersten Nebensäge (541) durch Verwendung der Informationen, die für die Breite (w1, w2) des defekten Bereichs (315) in der Nähe der ersten unfertigen Seitenfläche (310) der Holzlaminatplatte (300) bezeichnend sind, zu steuern.

12. Anordnung nach Anspruch 11, umfassend
- einen weiteren optischen Detektor (533), der dazu konfiguriert ist,
∘ eine Hauptfläche (301) der Holzlaminatplatte (300) abzubilden und
∘ Informationen (630) zu geben, die für die Form der Holzlaminatplatte (300) bezeichnend sind, wobei
- die Hauptfläche (301) der Holzlaminatplatte (300) eine Flächennormale (N3) im Wesentlichen parallel zur Dicke (T) der Holzlaminatplatte (300) aufweist und
- die Steuereinheit (600) dazu konfiguriert ist, die Informationen, die für die Breite (w1, w2) des defekten Bereichs (315) in der Nähe der ersten unfertigen Seitenfläche (310) der Holzlaminatplatte (300) bezeichnend sind, auch durch Verwendung der Informationen (630), die für die Form der Holzlaminatplatte (300) bezeichnend sind, zu ermitteln.

13. Anordnung nach Anspruch 11 oder 12, umfassend
- einen Seitenanschlag (552), der dazu konfiguriert ist, die erste unfertige Seitenfläche (310) der Holzlaminatplatte (300) aufzunehmen und
- Mittel (553) zum Bewegen des Seitenanschlags (552) relativ zur ersten Nebensäge (541) als Reaktion auf ein Signal (640) von der Steuereinheit (600), wobei
- die Steuereinheit (600) dazu konfiguriert ist, den Seitenanschlag (552) relativ zu der ersten Nebensäge (541) durch Verwendung von Folgendem zu bewegen:
∘ den Informationen, die für die Breite (w1, w2) des defekten Bereichs (315) in der Nähe der ersten unfertigen Seitenfläche (310) der Holzlaminatplatte (300) bezeichnend sind, und
∘ den Mitteln (553) zum Bewegen des Seitenanschlags (552) relativ zu der ersten Nebensäge (541).

14. Anordnung nach einem der Ansprüche 11 bis 13, umfassend
- eine weitere Nebensäge (543), die dazu konfiguriert ist, die Holzlaminatplatte (300) in mindestens zwei Stücke Holzlaminatplatte zu sägen, wobei jedes Stück Holzlaminatplatte eine erste fertige Seitenfläche, eine zweite fertige Seitenfläche, eine erste fertige Endfläche und eine zweite fertige Endfläche aufweist.

15. Anordnung nach einem der Ansprüche 11 bis 14, umfassend
- eine Fördervorrichtung (210) und eine Seitenausrichtungsvorrichtung (200), die in Kombination dazu konfiguriert sind, Folgendes auszurichten:
∘ eine Kante (111a) einer ersten Schicht (110) der Holzlaminatplatte (300) an einer Ausrichtungsposition und
∘ eine Kante (121a) einer zweiten Schicht (120) der Holzlaminatplatte (300) an der Ausrichtungsposition derart, dass
∘ die erste unfertige Seitenfläche (310) der Holzlaminatplatte (300) die Kante (111a) der ersten Schicht (110) und die Kante (121a) der zweiten Schicht (120) umfasst, wobei
- die Anordnung eine Fördervorrichtung zum Bewegen der Holzlaminatplatte zu der ersten Nebensäge (541) derart umfasst, dass die erste Nebensäge (541) dazu konfiguriert ist, das erste Seitenstück (312) von der Holzlaminatplatte (300) abzusägen, das die erste unfertige Seitenfläche (310) umfasst.

16. Anordnung nach Anspruch 15, umfassend
- eine Fördervorrichtung und eine zweite Seitenausrichtungsvorrichtung (205), die in Kombination dazu konfiguriert sind, Folgendes auszurichten
∘ eine weitere Kante (111b) einer ersten Schicht (110) der Holzlaminatplatte (300) an einer weiteren Seitenausrichtungsposition und
∘ eine weitere Kante (121b) einer zweiten Schicht (120) der Holzlaminatplatte (300) an der anderen Seitenausrichtungsposition derart, dass
∘ die erste unfertige Endfläche (330) der Holzlaminatplatte (300) die weitere Kante (111b) der ersten Schicht (110) und die weitere Kante (121b) der zweiten Schicht (120) umfasst, wobei
- die Anordnung eine Fördervorrichtung zum Bewegen der Holzlaminatplatte zu der ersten Hauptsäge (511) derart umfasst, dass die erste Hauptsäge (511) dazu konfiguriert ist, das erste Endstück (332) von der Holzlaminatplatte (300) abzusägen, das die erste unfertige Endfläche (330) umfasst.

## Revendications

1. Procédé permettant de scier des bords (310, 320, 330, 340) d'un panneau stratifié en bois (300), le panneau stratifié en bois (300) présentant
- une longueur (L), une largeur (W) et une épaisseur (T), dans lequel l'épaisseur (T) est inférieure à la plus petite entre la longueur (L) et la largeur (W),
- une première surface latérale non finie (310) présentant une première surface normale (N1) sensiblement parallèle à la longueur (L) ou à la largeur (W),
- une seconde surface latérale non finie (320) opposée à la première surface latérale non finie (310),
- une première surface d'extrémité non finie (330) présentant une seconde surface normale (N2) sensiblement perpendiculaire à l'épaisseur (T) et à la première surface normale (N1),
- une seconde surface d'extrémité non finie (340) opposée à la première surface d'extrémité non finie (330), le panneau stratifié en bois (300) comprenant
- une première couche (110) comprenant du bois et une seconde couche (120) comprenant du bois, la première et la seconde couches (110, 120) étant agencées l'une par rapport à l'autre dans la direction (Sz) de l'épaisseur (T) et
- un adhésif (195) entre la première couche (110) et la seconde couche (120) ;
le procédé comprenant
- le sciage dans le panneau stratifié en bois (300) d'une première pièce d'extrémité (332) comprenant la première surface d'extrémité non finie (330) en formant ainsi une première surface d'extrémité finie (331) sur le panneau stratifié de bois (300),
- le sciage dans le panneau stratifié en bois (300) d'une seconde pièce d'extrémité (342) comprenant la seconde surface d'extrémité non finie (340), en formant ainsi une seconde surface d'extrémité finie (341) sur le panneau stratifié de bois (300),
**caractérisé par**
- l'imagerie d'au moins une partie de la première surface d'extrémité finie (331) qui est proche de la première surface latérale non finie (310), en recevant ainsi les premières informations (610) indicatives de la structure du panneau stratifié de bois (300),
- l'imagerie d'au moins une partie de la seconde surface d'extrémité finie (341) qui est proche de la première surface latérale non finie (310), en recevant ainsi de secondes informations (620) indicatives de la structure du panneau stratifié de bois (300),
- la détermination, en utilisant les premières informations (610) et les secondes informations (620) indicatives de la structure du panneau stratifié de bois (300), d'informations indicatives d'une largeur (w1, w2) d'une zone défectueuse (315) près de la première surface latérale non finie (310) du panneau stratifié de bois (300),
- le déplacement du panneau stratifié de bois (300) et/ou d'une scie (541) l'un par rapport à l'autre, en utilisant les informations indicatives de la largeur (w1, w2) de la zone défectueuse (315) près de la première surface latérale non finie (310) du panneau stratifié de bois (300), de sorte que la zone défectueuse (315) puisse être sciée par la scie (541),
- le sciage dans le panneau stratifié de bois (300) d'une seconde pièce latérale (322) comprenant la seconde surface latérale non finie (320), en formant ainsi une seconde surface latérale finie (321) sur le panneau stratifié de bois (300), et
- après ledit déplacement du panneau stratifié de bois (300) et/ou de la scie (541) l'un par rapport à l'autre, le sciage dans le panneau stratifié de bois (300) d'une première pièce latérale (312) comprenant la zone défectueuse (315) et la première surface latérale non finie (310), en formant ainsi une première surface latérale finie (311) sur le panneau stratifié de bois (300).

2. Procédé selon la revendication 1, dans lequel
- le panneau stratifié de bois (300) comprend une surface principale (301) présentant une troisième surface normale (N3) sensiblement parallèle à l'épaisseur (T) du panneau stratifié de bois (300), le procédé comprenant
- l'imagerie d'au moins une partie de la surface principale (301), en recevant ainsi des informations (630) indicatives de la forme du panneau stratifié de bois (300) et
- la détermination, en utilisant également les informations (630) indicatives de la forme du panneau stratifié de bois (300), des informations indicatives de la largeur (w1, w2) de la zone défectueuse (315) près de la première surface latérale non finie (310) du panneau stratifié de bois (300).

3. Procédé selon la revendication 1 ou 2, comprenant
- le déplacement d'une butée latérale (552) relativement à une scie (541) en utilisant les informations indicatives de la largeur (w1, w2) de la zone défectueuse (315) près de la première surface latérale non finie (310) du panneau stratifié de bois (300) et
- le déplacement du panneau stratifié de bois (300) vers la butée latérale (552) jusqu'à ce que la première surface latérale non finie (310) du panneau stratifié de bois entre en contact avec la butée latérale (552),
de préférence le procédé comprend en outre
- le déplacement du panneau stratifié de bois (300) le long de la butée latérale (552) vers la scie (541) afin de scier la première pièce latérale (312).

4. Procédé selon l'une quelconque des revendications 1 à 3, dans lequel
- la première couche (110) du panneau stratifié de bois comprend du bois présentant une première direction de grain (710), et
- la seconde couche (120) du panneau stratifié de bois comprend du bois présentant une seconde direction de grain (720), dans lequel
- l'angle entre la première direction de grain (710) et la seconde direction de grain (720) est compris entre 60 et 120 degrés, comme entre 85 et 95 degrés, comme de 90 degrés.

5. Procédé selon l'une quelconque des revendications 1 à 4, dans lequel
- la première couche (710) du panneau stratifié de bois comprend
∘ une surface principale (301) du panneau stratifié de bois ou la surface principale selon la revendication 2, dans lequel la surface principale (301) présente une troisième surface normale (N3) sensiblement parallèle à l'épaisseur (T) du panneau stratifié de bois (300) et
∘ du bois présentant une première direction de grain (710), dans lequel
- la première direction de grain (710) est sensiblement parallèle à la seconde surface normale (N2).

6. Procédé selon l'une quelconque des revendications 1 à 5, dans lequel
- le panneau stratifié de bois comprend au moins trois couches (110, 120, 130, 140, 150) comprenant du bois, et/ou
- une couche (110) du panneau stratifié de bois comprend au moins un placage de bois (112) ayant été fabriqué par l'une des opérations parmi une découpe rotative, un tranchage à plat, un tranchage en quartier, un tranchage semi-circulaire, une découpe en séparation, et un sciage et/ou
- une couche (110) du panneau stratifié de bois comprend au moins un placage de bois (112) qui comprend du bois tendre.

7. Procédé selon l'une quelconque des revendications 1 à 6, comprenant
- la fabrication du panneau stratifié de bois avant de scier la première pièce d'extrémité (312) dans le panneau stratifié de bois (300) en
- alignant un bord (111a) de la première couche (110) à une position d'alignement latérale (200), et
- alignant un bord (121a) de la seconde couche (120) à une position d'alignement latérale (200), moyennant quoi
- la première surface latérale non finie (310) du panneau stratifié de bois (300) comprend le bord (111a) de la première couche (110) et le bord (121a) de la seconde couche (120).

8. Procédé selon la revendication 7, dans lequel la fabrication du panneau stratifié de bois comprend
- l'alignement d'un autre bord (111b) de la première couche (110) à une autre position d'alignement latérale (205), et
- l'alignement d'un autre bord (121b) de la seconde couche (120) à l'autre position d'alignement latérale (205), moyennant quoi
- la première surface d'extrémité non finie (330) du panneau stratifié de bois (300) comprend l'autre bord (111b) de la première couche (110) et l'autre bord (121b) de la seconde couche (120), le procédé comprenant, avant ledit sciage dans le panneau stratifié de bois (300), d'une première pièce d'extrémité (332) comprenant la première surface d'extrémité non finie (330)
- l'alignement de la première surface d'extrémité non finie (330) à une position d'alignement d'extrémité en utilisant un système d'alignement d'extrémité (551).

9. Procédé selon l'une quelconque des revendications 1 à 8, comprenant
- la détermination des informations indicatives d'une largeur (wND) d'une bonne superficie du panneau stratifié de bois en utilisant les premières informations (610) indicatives de la structure du panneau stratifié de bois (300) et éventuellement également au moins une parmi [i] les secondes (620) informations indicatives de la structure du panneau stratifié de bois, et [ii] les informations (630) indicatives de la forme du panneau stratifié de bois (300) ; et
- à condition que la largeur (wND) de la bonne superficie du panneau stratifié de bois (300) dépasse une limite, le sciage du panneau stratifié de bois (300) en au moins deux pièces de panneau stratifié de bois finies, chaque pièce finie de panneau stratifié de bois présentant une première surface latérale finie, une seconde surface latérale finie, une première surface d'extrémité finie et une seconde surface d'extrémité finie, de sorte que les pièces finies du panneau stratifié de bois ainsi sciées aient la même première taille,
- autrement,
∘ la production de seulement une pièce finie de panneau stratifié de bois (300) présentant la première surface latérale finie (311), la seconde surface latérale finie (321), la première surface d'extrémité finie (331) et la seconde surface d'extrémité finie (341) ou
∘ le sciage du panneau stratifié de bois (300) en au moins deux pièces finies de panneau stratifié de bois, chaque pièce finie de panneau stratifié de bois présentant une première surface latérale finie, une seconde surface latérale finie, une première surface d'extrémité finie, et une seconde surface d'extrémité finie, de sorte que l'une des pièces finies sciées de panneau stratifié de bois est inférieure à une autre pièce finie ainsi sciée de panneau stratifié de bois ou
∘ le sciage du panneau stratifié de bois (300) en au moins deux pièces finies de panneau stratifié de bois, chaque pièce finie de panneau stratifié de bois présentant une première surface latérale finie, une seconde surface latérale finie, une première surface d'extrémité finie, et une seconde surface d'extrémité finie, de sorte que toutes les pièces finies ainsi sciées de panneau stratifié de bois présentant la même taille, dans lequel la seconde taille est inférieure à la première taille.

10. Procédé de finition des bords de deux panneaux, comprenant
- selon le procédé selon l'une quelconque des revendications 1 à 9, le sciage d'au moins deux bords d'un panneau stratifié de bois primaire (300p), en sciant ainsi dans le panneau stratifié de bois primaire (300p), une première pièce latérale primaire (312p) comprenant la zone défectueuse (315p) du panneau stratifié de bois primaire (300p) présentant une largeur primaire (w1p), et
- selon le procédé selon l'une quelconque des revendications 1 à 9, le sciage d'au moins deux bords d'un panneau stratifié de bois secondaire (300s), en sciant ainsi dans le panneau stratifié de bois secondaire (300s), la zone défectueuse (315s) du panneau stratifié de bois secondaire (300s) présentant une largeur secondaire (w1s), dans lequel
- la largeur secondaire (w1s) est différente de la largeur primaire (w1p), moyennant quoi
- une largeur de la première pièce latérale secondaire (312s) est différente d'une largeur de la première pièce latérale primaire (312p).

11. Agencement comprenant
- une première scie primaire (511) configurée afin de scier dans un panneau stratifié de bois (300) une première pièce d'extrémité (332) comprenant une première surface d'extrémité non finie (330) du panneau stratifié de bois (300), afin de former une première surface d'extrémité finie (331) sur le panneau stratifié de bois (300),
- une seconde scie primaire (512) configurée afin de scier dans le panneau stratifié de bois (300) une seconde pièce d'extrémité (342) comprenant une seconde surface d'extrémité non finie (340) du panneau stratifié de bois, afin de former une seconde surface d'extrémité finie (341) sur le panneau stratifié de bois (300), dans lequel la seconde surface d'extrémité non finie (340) du panneau stratifié de bois (300) est opposée à la première surface d'extrémité non finie (330) du panneau stratifié de bois (300),
- une première scie secondaire (541) configurée afin de scier dans le panneau stratifié de bois (300) une première pièce latérale (312) comprenant la première surface latérale non finie (310) du panneau stratifié de bois (300) et une zone défectueuse (315),
- une seconde scie secondaire (542) configurée afin de scier dans le panneau stratifié de bois (300) une seconde pièce latérale (322) comprenant une seconde surface latérale non finie (320) du panneau stratifié de bois (300), dans lequel la seconde surface latérale non finie (320) du panneau stratifié de bois (300) est opposée à la première surface latérale non finie (310) du panneau stratifié de bois (300),
- des moyens (561, 571, 552) permettant de déplacer le panneau stratifié de bois (300) et/ou la première scie secondaire (541) l'un par rapport à l'autre,
- la première surface latérale non finie (310) du panneau stratifié de bois (300) présente une première surface normale (N1) sensiblement parallèle à une largeur (W) ou une longueur (L) du panneau stratifié de bois (300), et
- la première surface d'extrémité non finie (330) du panneau stratifié de bois présente une seconde surface normale (N2) sensiblement perpendiculaire à l'épaisseur (T) du panneau stratifié de bois et à la première surface normale (N1),
**caractérisé par**
- un premier détecteur optique (531) configuré afin d'imager au moins une telle pièce de la première surface d'extrémité finie (331) qui est proche d'une première surface latérale non finie (310) du panneau stratifié de bois (300), et afin de donner de premières information (610) indicatives de la structure du panneau stratifié de bois (300),
- un second détecteur optique (532) configuré afin d'imager la seconde surface d'extrémité finie (341) et afin de donner de secondes informations (620) indicatives de la structure du panneau stratifié de bois (300),
- une unité de commande (600) configurée afin de déterminer des informations indicatives d'une largeur (w1, w2) de la zone défectueuse (315) près de la première surface latérale non finie (310) du panneau stratifié de bois (300) en utilisant les premières informations (610) et les secondes informations (620) indicatives de la structure du panneau stratifié de bois (300), dans lequel
- l'unité de commande (600) est configurée afin de commander les moyens (561, 571, 552) permettant de déplacer le panneau stratifié de bois (300) et/ou la première scie secondaire (541), en utilisant les informations indicatives de la largeur (w1, w2) de la zone défectueuse (315) près de la première surface latérale non finie (310) du panneau stratifié de bois (300).

12. Agencement selon la revendication 11, comprenant
- un autre détecteur optique (533) configuré afin
∘ d'imager une surface principale (301) du panneau stratifié de bois (300) et
∘ de donner des informations (630) indicatives de la forme du panneau stratifié de bois (300), dans lequel
- la surface principale (301) du panneau stratifié de bois (300) présente une surface normale (N3) sensiblement parallèle à l'épaisseur (T) du panneau stratifié de bois (300), et
- l'unité de commande (600) est configurée afin de déterminer les informations indicatives de la largeur (w1, w2) de la zone défectueuse (315) près de la première surface latérale non finie (310) du panneau stratifié de bois (300) en utilisant également les informations (630) indicatives de la forme du panneau stratifié de bois (300).

13. Agencement selon la revendication 11 ou 12, comprenant
- une butée latérale (552), configurée afin de recevoir la première surface latérale non finie (310) du panneau stratifié de bois (300) et
- un moyen (553) permettant de déplacer la butée latérale (552) relativement à la première scie secondaire (541) en réponse à un signal (640) provenant de l'unité de commande (600), dans lequel
- l'unité de commande (600) est configurée afin de déplacer la butée latérale (552) relativement à la première scie secondaire (541) en utilisant
∘ les informations indicatives de la largeur (w1, w2) de la zone défectueuse (315) près de la première surface latérale non finie (310) du panneau stratifié de bois (300) et
∘ le moyen (553) permettant de déplacer la butée latérale (552) relativement à la première scie secondaire (541).

14. Agencement selon l'une quelconque des revendications 11 à 13, comprenant
- une scie secondaire ultérieure (543) configurée afin de scier le panneau stratifié de bois (300) au moins en deux morceaux de panneau stratifié de bois, chaque pièce de panneau stratifié de bois présentant une première surface latérale finie, une seconde surface latérale finie, une première surface d'extrémité finie, et une seconde surface d'extrémité finie.

15. Agencement selon l'une quelconque des revendications 11 à 14, comprenant
- un convoyeur (210) et un aligneur latéral (200) qui sont, en combinaison, configurés afin d'aligner
∘ un bord (111a) d'une première couche (110) du panneau stratifié de bois (300) à une position d'alignement et
∘ un bord (121a) d'une seconde couche (120) du panneau stratifié de bois (300) à la position d'alignement de sorte que
∘ la première surface latérale non finie (310) du panneau stratifié de bois (300) comprend le bord (111a) de la première couche (110) et le bord (121a) de la seconde couche (120), dans lequel
- l'agencement comprend un convoyeur permettant de déplacer le panneau stratifié de bois vers la première scie secondaire (541) de sorte que la première scie secondaire (541) soit configurée afin de scier dans le panneau stratifié de bois (300) la première pièce latérale (312) comprenant la première surface latérale non finie (310).

16. Agencement selon la revendication 15, comprenant
- un convoyeur et un second aligneur latéral (205) qui sont, en combinaison, configurés afin d'aligner
∘ un autre bord (111b) d'une première couche (110) du panneau stratifié de bois (300) à une autre position d'alignement latérale et
∘ un autre bord (121b) d'une seconde couche (120) du panneau stratifié de bois (300) à l'autre position d'alignement latérale de sorte que
∘ la première surface d'extrémité non finie (330) du panneau stratifié de bois (300) comprenne l'autre bord (111b)de la première couche (110) et l'autre bord (121b) de la seconde couche (120), dans lequel
- l'agencement comprend un convoyeur permettant de déplacer le panneau stratifié de bois vers la première scie primaire (511) de sorte que la première scie primaire (511) soit configurée afin de scier dans le panneau stratifié de bois (300) la première pièce d'extrémité (332) comprenant la première surface d'extrémité non finie (330).
